# EUROPEAN PATENT APPLICATION

(11) **EP 3 324 278 A1**
(43) Date of publication of application: **23.05.2018**
(21) Application number: 17202056.2
(22) Date of filing: 16.11.2017
(51) Int. Cl.: G06F 3/0481, G06F 3/0488

(54) **ELECTRONIC DEVICE AND METHOD FOR DISPLAYING EXECUTION SCREEN OF APPLICATION USING ICONS**

(30) Priority: 16.11.2016 KR 20160152823
(71) Applicant: Samsung Electronics Co., Ltd., Gyeonggi-do 16677 (KR)
(72) Inventor: Lee, Ho-Young, 16677 Suwon-si (KR); Yoo, Ji-Won, 16677 Suwon-si (KR)
(74) Representative: Nederlandsch Octrooibureau

(57) **Abstract**

An electronic device and a method for displaying an execution screen of an application using icons are provided. The electronic device includes a touch screen that displays one or more application execution icons; and a processor that is electrically connected with the touch screen, and is configured, when a first icon is selected from among the one or more application execution icons, to display an execution screen of a first application corresponding to the first icon, wherein the execution screen of the first application is configured to display at least one second object corresponding to at least one of first object among a plurality of icon objects included in the first icon.

## Description

### BACKGROUND

### 1. Field of the Disclosure

The present disclosure relates generally to an electronic device, and, more particularly, to an electronic device and method for displaying an execution screen of an application using icons.

### 2. Description of the Related Art

In general, mobile terminals (e.g., smart phones) may display one or more icons on a screen, and may display a user interface for an application or widget when an event for executing the application or widget corresponding to one of the displayed icons is generated. For example, a mobile terminal equipped with a touch screen may display one or more icons on the touch screen, and, when a touch input with respect to a specific icon is received, may display an execution screen for an application or widget corresponding to the specific icon.

Recently, there has been a need for improving the usability of a user interface by recognizing the structure of a user interface of an application corresponding to an icon through the understanding of the structure of an icon.

### SUMMARY

According to one aspect of the present disclosure, various embodiments provide an electronic device and method for displaying an execution screen of an application using an icon.

According to one aspect of the present disclosure, an electronic device is provided, which includes a touch screen that displays one or more application execution icons; and a processor that is electrically connected with the touch screen, wherein, the processor is configured, when a first icon is selected from among the one or more application execution icons, to display an execution screen of a first application corresponding to the first icon, and wherein the execution screen of the first application is configured to display at least one of second objects corresponding to at least one of first objects among a plurality of icon objects included in the first icon.

According to one aspect of the present disclosure, a recording medium storing instructions is provided that is configured, when being executed by at least one processor, to allow the at least one processor to execute one or more operations including: displaying one or more application execution icons on a touch screen; and displaying an execution screen of a first application corresponding to a first icon when the first icon is selected from among the one or more application execution icons, wherein the execution screen of the first application is configured to display at least one of second objects corresponding to at least one of first objects among a plurality of icon objects included in the first icon.

According to one aspect of the present disclosure, a method of operating an electronic device is provided, which includes displaying one or more application execution icons on a touch screen; and displaying an execution screen of a first application corresponding to a first icon when the first icon is selected from among the one or more application execution icons, wherein the execution screen of the first application is configured to display at least one of second objects corresponding to at least one of first objects among a plurality of icon objects included in the first icon.

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is a diagram of a network environment including an electronic device, according to an embodiment of the present disclosure;
FIG. 2 is a block diagram of an electronic device, according to an embodiment of the present disclosure;
FIG. 3 is a block diagram of a program module, according to an embodiment of the present disclosure;
FIG. 4 is a configuration diagram of an electronic device, according to an embodiment of the present disclosure;
FIGS. 5A and 5B are flowcharts showing a method for providing a user interface using icons, according to an embodiment of the present disclosure;
FIGS. 6A and 6B are diagrams showing icons, according to an embodiment of the present disclosure;
FIGS. 7A and 7B are diagrams showing a user interface, according to an embodiment of the present disclosure;
FIGS. 8A, 8B, 8C, 8D, and 8E are diagrams of a plurality of animation objects constituting an animation, according to an embodiment of the present disclosure;
FIG. 9 is a flowchart of a method for providing a user interface using icons, according to an embodiment of the present disclosure;
FIGS. 10A, 10B, 10C, and 10D are diagrams of user interfaces using icons, according to an embodiment of the present disclosure;
FIGS. 11A, 11B, 11C, and 11D are diagrams of user interfaces using icons, according to an embodiment of the present disclosure;
FIGS. 12AA, 12AB, 12AC, 12AD, 12BA, 12BB, 12BC, and 12BD are diagrams of user interfaces using icons, according to an embodiment of the present disclosure;
FIGS. 13A, 13B, 13C, and 13D are diagrams of user interfaces using icons, according to an embodiment of the present disclosure;
FIGS. 14A, 14B, 14C, and 14D are diagrams of user interfaces using icons, according to an embodiment of the present disclosure;
FIGS. 15A, 15B, 15C, and 15D are diagrams of user interfaces using icons, according to an embodiment of the present disclosure;
FIGS. 16A, 16B, 16C, and 16D are diagrams of user interfaces using icons, according to an embodiment of the present disclosure;
FIGS. 17A, 17B, 17C, and 17D are diagrams of user interfaces using icons, according to an embodiment of the present disclosure;
FIGS. 18A, 18B, 18C, and 18D are diagrams of user interfaces using icons, according to an embodiment of the present disclosure;
FIGS. 19A, 19B, 19C, and 19D are diagrams of user interfaces using icons, according to an embodiment of the present disclosure;
FIGS. 20A, 20B, 20C, and 20D are diagrams of user interfaces using icons, according to an embodiment of the present disclosure; and
FIGS. 21AA, 21AB, 21AC, 21AD,21BA, 21BB, 21BC, and 21BD are diagrams of user interfaces using icons, according to an embodiment of the present disclosure.

### DETAILED DESCRIPTION OF EMBODIMENTS OF THE PRESENT DISCLOSURE

Embodiments of the present disclosure are described in detail with reference to the accompanying drawings. The same or similar components may be designated by the same or similar reference numerals although they are in different drawings. Detailed descriptions of constructions or processes known in the art may be omitted to avoid obscuring the subject matter of the present disclosure.

A singular expression may include a plural expression unless clearly indicated otherwise in context. In the present disclosure, the expressions "A or B", "at least one of A and/or B", or "A/B" may include all possible combinations of the items listed. The expressions "a first", "a second", "the first", or "the second" used herein are merely used to separately identify various components regardless of their order and/or importance, unless indicated otherwise in context. When an element is referred to as being "(functionally or communicatively) connected," or "directly coupled" to another element), the element may be connected directly to the other element or connected to the other element through yet another element.

The expression "configured to" as used in the present disclosure may be interchangeably used with, for example, "suitable for", "having the capacity to", "designed to", "adapted to", "made to", or "capable of' in terms of hardware or software, according to circumstances/context. Alternatively, in some situations, the expression "device configured to" may mean that the device, together with other devices or components, "is able to" or "is capable of' performing the listed action. For example, the phrase "processor adapted (or configured) to perform A, B, and C" may mean a dedicated processor (e.g., embedded processor) only for performing the corresponding operations or a generic-purpose processor (e.g., central processing unit (CPU) or application processor (AP)) that can perform the corresponding operations by executing one or more software programs stored in a memory device, but is not necessarily designed or otherwise specifically altered in any way to perform those operations.

An electronic device according to various embodiments of the present disclosure may be at least one of, for example, a smart phone, a tablet, a personal computer (PC), a mobile phone, a video phone, an electronic book reader (e-book reader), a desktop PC, a laptop PC, a netbook computer, a workstation, a server, a personal digital assistant (PDA), a portable multimedia player (PMP), a MPEG-1 audio layer-3 (MP3) player, a mobile medical device, a camera, and a wearable device. As used herein, a wearable device may be at least one of an accessory type (e.g., a watch, a ring, a bracelet, an anklet, a necklace, glasses, contact lenses, or a head-mounted device (HMD)), a fabric or clothing integrated type (e.g., an electronic clothing), a body-mounted type (e.g., a skin pad, or tattoo), and/or a bio-implantable type (e.g., an implantable circuit). An electronic device may be at least one of, for example, a television, a digital video disk (DVD) player, an audio device, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

The electronic device may also be one or more medical devices, such as,e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and/or an ultrasonic machine. An electronic device as used herein may be a navigation device, a global positioning system (GPS) receiver, an event data recorder (EDR), a flight data recorder (FDR), a vehicle infotainment devices, an electronic device for a ship (e.g., a navigation device for a ship, and/or a gyro-compass), avionic devices, security devices, an automotive head unit, a robot for home or industry, an automatic teller machine (ATM), a point of sale (POS) device , or an Internet of things (IoT) device (e.g., a light bulb, a sensor, an electric or gas meter, a sprinkler device, a fire alarm, a thermostat, a streetlamp, a toaster, sporting goods, a hot water tank, a heater, a boiler, etc.). As used herein, an electronic device may be at least one of a part of furniture or a building/structure, an electronic board, an electronic signature receiving device, a projector, and/or various types of measuring instruments (e.g., a water meter, an electric meter, a gas meter, a radio wave meter, and the like). As used herein, an electronic device may be flexible or may be a combination of one or more of the aforementioned various devices. The electronic device according to the present disclosure is not limited to the above described devices. In the present disclosure, the term "user" may indicate a person using an electronic device or a device (e.g., an artificial intelligence electronic device) using an electronic device.

According to various embodiments, the present disclosure can improve the usability of an application user interface by recognizing the structure of a user interface of an application corresponding to an icon through the understanding of the structure of an icon.

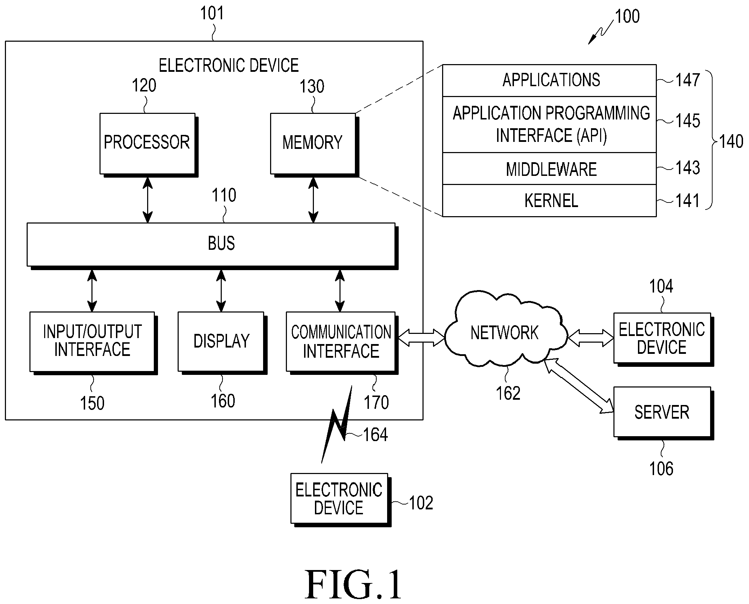

FIG. 1 is a diagram of a network environment including an electronic device, according to an embodiment of the present disclosure.

Referring to FIG. 1, an electronic device 101, capable of use in various embodiments of the present disclosure, is included in a network environment 100. The electronic device 101 includes a bus 110, a processor 120, a memory 130, an input/output interface 150, a display 160, and a communication interface 170. In some embodiments, the electronic device 101 may exclude one or more of the above-listed components/elements or may have additional components/elements.

The bus 110 includes a circuit for connecting the elements 110 to 170 with each other and for transferring communication data (e.g., control messages or data) between the elements.

The processor 120 may include at least one of a central processing unit, an AP, or a communication processor (CP). The processor 120 processes calculations or data that are related to the control and/or communication of one or more other elements of the electronic device 101.

According to an embodiment, the processor 120 controls the display 160 to display one or more icons (or buttons). When application execution icons are displayed on the display 160, and a first icon is selected from among the application execution icons, the processor 120 displays an execution screen of a first application corresponding to the first icon on the display 160.

According to an embodiment, the execution screen of the first application includes one or more second objects (e.g., a background object and a configuration object constituting the execution screen) corresponding to one or more first objects included in the first icon (e.g., a background object and a configuration object constituting the first icon). For example, regarding the first objects, the background object of the first icon may correspond to the background of the first icon, and the configuration object of the first icon may refer to the characteristics (or concept, function, or meaning) of the first application corresponding to the first icon. Similarly, regarding the second objects, the background object of the execution screen may be a frame of the execution screen, and the configuration object of the execution screen may be an icon, a menu, an image, or text, which corresponds to at least one function of the first application.

According to an embodiment, the processor 120 may display one or more second objects caused by changing at least one of a position, a size, or a shape of at least one of the first objects on the execution screen of the first application.

The memory 130 may include a volatile and/or non-volatile memory. The memory 130 may store instructions or data in relation to one or more other elements of the electronic device 101. As shown in FIG. 1, the memory 130 stores software and/or programs 140, which include a kernel 141, middleware 143, an application programming interface (API) 145, and application programs (or applications) 147. At least some of the kernel 141, the middleware 143, or the API 145 may be as all or part of an operating system.

The kernel 141 controls or manages system resources (e.g., the bus 110, the processor 120, or the memory 130), which are used to execute the operation or function that is implemented in other programs (e.g., the middleware 143, the API 145, or the application programs 147). In addition, the kernel 141 may provide an interface by which the middleware 143, the API 145, or the application programs 147 may access each element of the electronic device 101 for control or management of the system resources.

The middleware 143 plays the intermediate role between the API 145 or the application programs 147 and the kernel 141 to communicate with each other for the transmission and reception of data. In addition, the middleware 143 may process one or more operation requests that are received from the application programs 147 according to their priority. For example, the middleware 143 may process one or more operation requests by giving priority for using the system resources (e.g., the bus 110, the processor 120, or the memory 130) of the electronic device 101 to at least one of the application programs 147.

The API 145 is an interface by which the application programs 147 control functions that are provided by the kernel 141 or the middleware 143, and may include one or more interfaces or functions (e.g., instructions) for file control, window control, image processing, or text control. The input/output interface 150 transfers instructions or data received from a user or an external device to elements of the electronic device 101, or may output instructions or data received from elements of the electronic device 101 to a user or an external device.

The display 160 may include a liquid crystal display (LCD), a light emitting diode (LED) display, an organic light emitting diode (OLED) display, a micro-electromechanical system (MEMS) display, or an electronic paper display. The display 160 can be used to display a variety of content (e.g., text, images, videos, icons, and/or symbols) to the user. The display 160 may include a touch screen, which may receive a touch input, a gesture input, a proximity input, a drag input, a swipe input, or a hovering input by using an electronic pen or a user's body part.

The communication interface 170 establishes communication between the electronic device 101 and external devices (e.g., a first external electronic device 102, a second external electronic device 104, or a server 106). For example, in FIG. 1, the communication interface 170 is connected to the network 162 through wireless communication or wired communication in order to thereby communicate with the second external electronic device 104 or the server 106.

The wireless communication of the electronic device 101 includes cellular communication using at least one of long term evolution (LTE), LTE Advance (LTE-A), code division multiple access (CDMA), wideband CDMA (WCDMA), an universal mobile telecommunications system (UMTS), wireless broadband (WiBro), global system for mobile communications (GSM), or the like. The wireless communication may communicate with smaller communication networks using at least one of WiFi, Bluetooth, Bluetooth Low Energy (BLE), Zigbee, near field communication (NFC), magnetic secure transmission (MST), radio frequency (RF), and/or a body area network (BAN). The wireless communication may include global navigation satellite system(GNSS) reception using, for example, global positioning System (GPS), GLONASS (the Russian GNSS), a Beidou Navigation Satellite System (Beidou), or Galileo, the European global satellite-based navigation system. "GPS" may be used interchangeably with "GNSS" in the present specification. The wired communication of electronic device 101 may include at least one of a universal serial bus (USB), high definition multimedia interface (HDMI), RS-232, or a plain old telephone service (POTS). The network 162 may be one or more telecommunication networks, computer networks (e.g., a local area network (LAN) or a wide area network (WAN)), such as the Internet, and/or other types of telephone networks.

First and second external electronic devices 102 and 104 may be the same type as, or different from, the electronic device 101. At least some or all of the operations that are executed in the electronic device 101 may be executed by one or more other electronic devices (e.g., the electronic device 102 or 104, or the server 106).

When the electronic device 101 executes a certain function or service automatically or by request, the electronic device 101 may make a request to other devices (e.g., the external electronic devices 102 or 104, or the server 106) to execute at least some of the functions related thereto or instead execute the function or service by itself. When other electronic devices execute at least some of the functions, the other electronic device(s) transfer the result thereof to the electronic device 101. The electronic device 101 may further process the received result before providing the function or service. In addition, for example, cloud computing, distributed computing, or client-server computing technology may be used.

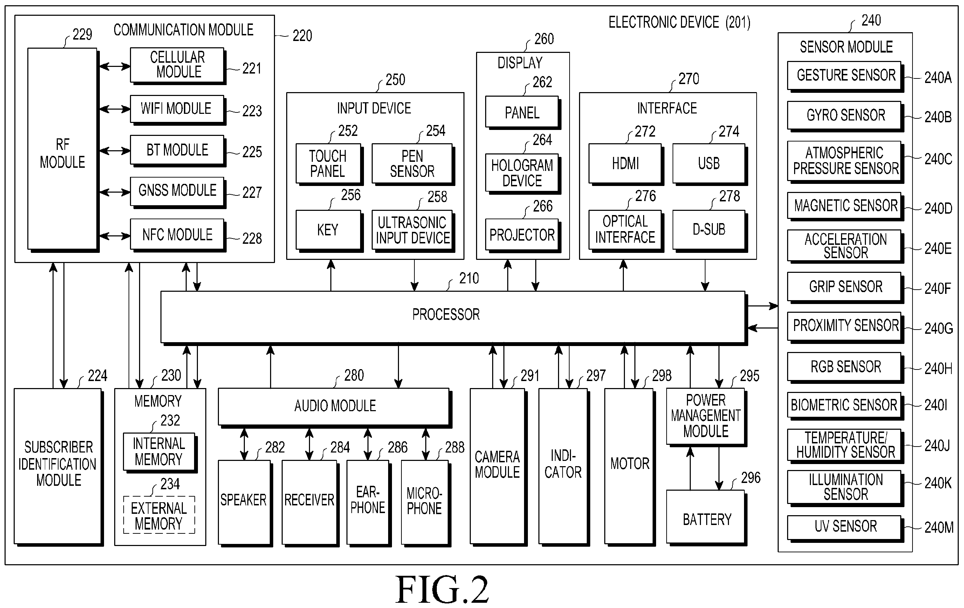

FIG. 2 is a block diagram of an electronic device 201, according to an embodiment of the present disclosure.

Referring to FIG. 2, the electronic device 201 includes a processor (e.g., an AP) 210, a communication module 220, a subscriber identification module 224, a memory 230, a sensor module 240, an input device 250, a display 260, an interface 270, an audio module 280, a camera module 291, a power management module 295, a battery 296, an indicator 297, and a motor 298. The processor controls the multitude of hardware or software elements connected with the processor 210, and processes of various pieces of data and calculation by, e.g., executing an operating system or application programs. The processor 210 may be implemented as a system on chip (SoC) or a part thereof. The processor 210 may further include a graphic processing unit (GPU) and/or an image signal processor. The processor 210 may include at least some (e.g., the cellular module 221) of the elements shown in FIG. 2. The processor 210 may load instructions or data received from one or more other elements (e.g., a non-volatile memory) to a volatile memory to process the same, and then store result data in a non-volatile memory.

The processor 210 may display one or more icons (or buttons) on the display 260. In an embodiment, when a first icon is selected from among one or more displayed icons, the processor 210 may display, on the display 260, an execution screen of a first application corresponding to the first icon. The execution screen of the first application may include at least one second object corresponding to at least one first object, the first objects being included in the first icon. The execution screen of the first application may display at least one second object obtained by changing at least one of a position, a size, and a shape of at least one first object.

The communication module 220 may have the same or a similar configuration as the communication interface 170. The communication module 220 includes a cellular module 221, a WiFi module 223, a Bluetooth module 225, a GNSS module 227, an NFC module 228, and an RF module 229. The cellular module 221 provides services of voice calls, video calls, text messaging, or the Internet, through communication networks. The cellular module 221 may perform identification and verification of the electronic device 201 in communication networks by using the subscriber identification module (SIM) 224. According to an embodiment, the cellular module 221 may perform at least some of the processing functions provided by the processor 210 in other embodiments, and may include a communication processor (CP). According to certain embodiments, at least some (e.g., two or more) of the cellular module 221, the WiFi module 223, the Bluetooth module 225, the GNSS module 227, or the NFC module 228 may be included in one integrated chip (IC) or one IC package. The RF module 229 transmits and receives RF communication signals. The RF module 229 may include a transceiver, a power amp module (PAM), a frequency filter, a low noise amplifier (LNA), and/or one or more antennas. According to another embodiment, at least one of the cellular module 221, the WiFi module 223, the Bluetooth module 225, the GNSS module 227, or the NFC module 228 may transmit and receive RF signals through a separate RF module. SIM 224, for example, may be a card that adopts a subscriber identification module or an embedded SIM, and may contain inherent identification information, (e.g., an integrated circuit card identifier (ICCID), or subscriber information, e.g., an international mobile subscriber identity (IMSI).

The memory 230 includes an internal memory 232 and an external memory 234. The internal memory 232 may include one or more of volatile memories, e.g., a random access memory (RAM), a dynamic RAM (DRAM), a static RAM (SRAM), asynchronous dynamic (SDRAM), or the like, or non-volatile memories, e.g., a read only memory (ROM), a one-time programmable ROM (OTPROM), a programmable ROM (PROM), an erasable ROM (EPROM), an electrically erasable and programmable ROM (EEPROM), a mask ROM, a flash ROM, a flash memory, a hard drive, a solid state drive (SSD), or the like. The external memory 234 may include a flash drive, e.g., such as compact flash (CF), secure digital (SD), Micro-SD, Mini-SD, extreme digital (xD), a multimedia card (MMC), and/or a memory stick. The external memory 234 may be functionally and/or physically connected with the electronic device 201 through various interfaces.

The sensor module 240 measures physical quantities and/or detects the operation state of the electronic device 201. The sensor module 240 includes a gesture sensor 240A, a gyro sensor 240B, an atmospheric pressure sensor 240C, a magnetic sensor 240D, an acceleration sensor 240E, a grip sensor 240F, a proximity sensor 240G, a color (i.e., red-green-blue (RGB)), sensor 240H, a biometric sensor 240I, a temperature/humidity sensor 240J, an illuminance/illumination sensor 240K, and an ultra violet (UV) light sensor 240M. The sensor module 240 may further include an e-nose sensor, an electromyography (EMG) sensor, an electroencephalogram (EEG) sensor, an electrocardiogram (ECG) sensor, an infrared (IR) sensor, an iris sensor, and/or a fingerprint sensor. The processor 210 or a part of the processor 210 may control the sensor module 240, or a processor separately from the processor 210 may be configured to control the sensor module 240. The sensor module 240 may include its own control circuit for controlling one or more of its sensors. A separate processor or one embedded in the sensor module 240 may thereby control sensor module 240 while the processor 210 is in a sleep mode.

The input device 250 includes a touch panel 252, a (digital) pen sensor 254, keys 256, and an ultrasonic input device 258. The touch panel 252 may be at least one of, for example, a capacitive type, a pressure-sensitive type, an infrared type, or an ultrasonic type. The touch panel 252 may include a control circuit. The touch panel 252 may include a tactile layer in order to thereby provide a user with a tactile reaction. The (digital) pen sensor 254 may be a part of the touch panel, may be separate, and/or may use a separate recognition sheet. The keys 256 may be physical buttons, optical keys, or a keypad. The ultrasonic input device 258 detects ultrasonic waves, which may be generated from microphone 288. The ultrasonic input device may thereby identifying data corresponding to the detected ultrasonic waves.

The display 260 includes a panel 262, a hologram device 264, a projector 266, and/or may include a control circuit for controlling the same. The panel 262 may be implemented to be flexible, transparent, and/or wearable. The panel 262 may be capable of detecting contact, such as a user's touch. The panel 262 may be implemented to be integral with the touch panel 252 as one or more touchscreen modules. The pressure sensor may be implemented with one or more pressure/force/contact sensors separate from the touch panel 252. The hologram device 264 displays 3D images in the air by using, *e.g.,* the interference of projected light. The projector 266 displays images by projecting light onto a flat surface, such as a screen, which may be positioned, for example, inside or outside the electronic device 201. The interface 270 includes an HDMI 272, a USB 274, an optical interface 276, or a D-subminiature (D-sub) 278. The interface 270 may be implemented either partially or wholly integrated with other components. The communication interface 170 shown in FIG. 1 may have one or more of the sub-components of interface 270 in FIG. 2. The interface 270, may include a mobile high-definition link (MHL) interface, an SD card/multimedia card (MMC) interface, and/or an infrared data association (IrDA) standard interface.

The audio module 280 converts sound into electric signals, and vice versa. For example, the audio module 280 may process voice information that is input or output through a speaker 282, a receiver 284, earphones 286, and/or the microphone 288. At least some elements of the audio module 280, for example, may be included in the input/output interface 150 shown in FIG. 1.

The camera module 291 is a device for photographing still and/or moving images, and may include one or more image sensors (e.g., a front sensor or a rear sensor), lenses, an image signal processor (ISP), or a flash (e.g., a light emitting diode (LED) or a xenon lamp).

The power management module 295 manages power of the electronic device 201. The power management module 295 may include a power management integrated circuit (PMIC), a charger integrated circuit (IC), and/or a battery gauge. The power management module 295 may be implemented as a wired charging type and/or a wireless charging type. The wireless charging type may be any one or more of a magnetic resonance type, a magnetic induction type, and/or an electromagnetic wave type, and may include circuits for wireless charging, such as coil loops, resonance circuits, and/or rectifiers. A battery gauge may measure the remaining power of the battery 296, a charging voltage, current, and/or temperature. The battery 296 may be a rechargeable battery and/or a solar battery.

The indicator 297 displays a certain state (e.g., a booting state, a message state, or a charging state) of the whole or a part (e.g., the processor 210) of the electronic device 201.

The motor 298 converts electric signals to mechanical vibrations, and may generate a vibration or a haptic effect.

The electronic device 201 may support mobile TV, which may require processing media data according to standards, such as digital multimedia broadcasting (DMB), digital video broadcasting (DVB), or mediaFlo™, and one or more components (such as, e.g., a graphics processing unit (GPU)). The respective elements described in the present specification may be configured with one or more components, and the names of the elements may vary depending on the type of electronic device and field of use. An electronic device according to embodiments of the present disclosure may be configured as multiple entities or a single entity by, for example, excluding some elements thereof, including additional elements, and/or combining some of the elements, where the resulting configuration performs the same functions as the original elements.

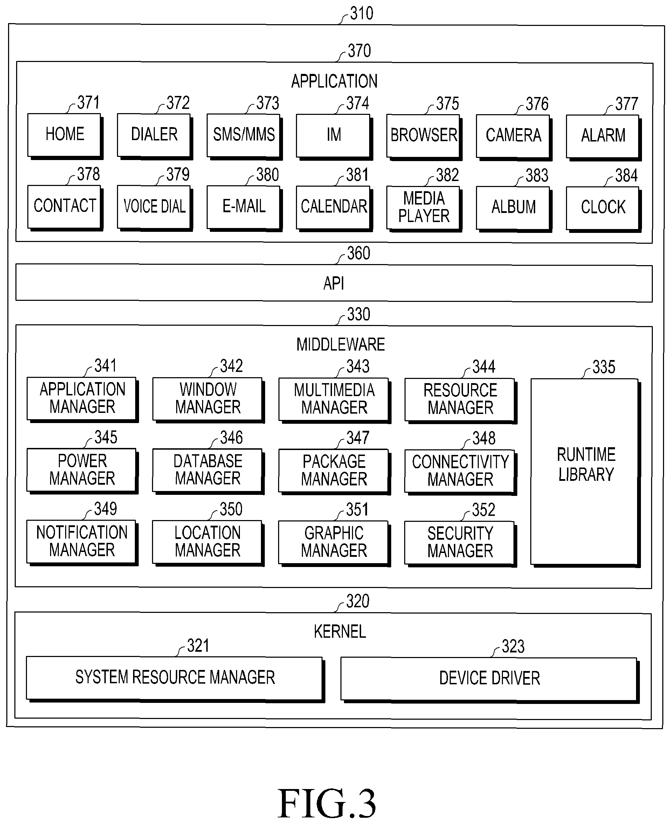

FIG. 3 is a block diagram of a program module, according to an embodiment of the present disclosure. The program module 310 (similar to the programs 140 in FIG. 1) may include an operating system (OS) for controlling resources that are related to the electronic device and/or various applications that are operated under the operating system. For example, the operating system may be Android™, iOS™, Windows™, Symbian™, Tizen™, Bada™, or the like.

Referring to FIG. 3, the program module 310 includes a kernel 320, middleware 330, an API 360, and applications 370. At least some of the program module 310 may be preloaded in the electronic device, or may be downloaded from external electronic devices and/or over a network.

The kernel 320 includes a system resource manager 321 and a device driver 323. The system resource manager 321 performs control, allocation, and/or collection of system resources. The system resource manager 321 may include a process management unit, a memory management unit, and/or a file system management unit. The device driver 323 may include a display driver, a camera driver, a Bluetooth driver, a shared memory driver, a USB driver, a keypad driver, a Wi-Fi driver, an audio driver, and/or an inter-process communication (IPC) driver. The middleware 330 provides functions required in common for the applications 370, and/or provides the applications 370 with various functions through the API 360 in order to allow the applications 370 to use limited system resources in the electronic device. The middleware 330 includes a run time library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The run time library 335 includes one or more library modules that the compiler uses in order to, e.g., add new functions through programming languages while the applications 370 are executed. The run time library 335 may be used to perform input/output management, memory management, or an arithmetic function calculation. The application manager 341 manages, for example, life cycles of the applications 370. The window manager 342 manages, for example, a GUI resource used in the screen. The multimedia manager 343 identifies formats for reproducing various media files, and performs encoding or decoding of media files by using a codec corresponding to each format. The resource manager 344 manages, for example, source codes of the applications 370 or storage spaces. The power manager 345 manages the capacity of a power source, such as a battery, and may provide power information necessary for the operation of the electronic device and/or interwork with a basic input/output system (BIOS). The database manager 346 creates, retrieves, or changes one or more databases to be used, for example, in the applications 370. The package manager 347 manages the installation or updating of the applications that are distributed in the form of a package file.

The connectivity manager 348 manages a wireless connection. The notification manager 349 provides notifications, such as notifications of events (e.g., received messages, appointments, and/or proximity notifications) to the user. The location manager 350 manages location information of the electronic device. The graphic manager 351 manages graphic effects to be provided to the user through, e.g., user interfaces. The security manager 352 provides system security or user authentication. The middleware 330 may also have a telephony manager for managing the functions of a voice call or a video call of the electronic device. There may be a middleware module configured to perform a combination of the functions of the abovementioned individual managers. The middleware 330 may have a module that is specialized according to the type of operating system. The middleware 330 may dynamically change elements/managers, by, for example, excluding elements and/or adding elements.

The API 360 is a group of programming functions (or "APIs"), usually having one or more configurations according to the operating system. For example, one set of APIs may be provided to an Android platform and another to an iOS platform, while two or more sets of APIs may be provided to a Tizen platform.

The applications 370 include applications for home 371, a dialer 372, a short message service (SMS)/multimedia message service (MMS) 373, an instant messaging (IM) service 374, a browser 375, a camera 376, an alarm 377, a contacts file 378, voice dialing 379, e-mail 380, a calendar 381, a media player 382, an album 383, and a clock 384. Additional possible applications include a watch application, which may provide healthcare information (e.g., measuring the amount of exercise or blood glucose), or environmental information (e.g., providing atmospheric pressure, humidity, or temperature information), and information-exchange applications that support the exchange of information between the electronic device and external electronic devices. Information-exchange applications include, for example, a notification relay application for relaying certain information to external electronic devices or a device management application for managing external electronic devices. The notification relay application may transfer notification information generated in other applications of the electronic device to the external electronic devices, or may receive notification information from the external electronic devices to then be provided to the user. The device management application may install, delete, or update functions, e.g., turning on and off an external electronic device (or some components thereof) or adjusting the brightness (or resolution) of a display, of an external electronic device or applications executed in the external electronic device. According to an embodiment, the applications 370 may include applications that are designated according to an attribute of the external electronic device (e.g., the healthcare application of a mobile medical device). The applications 370 may be received from external electronic devices. At least some of the program modules 310 may be implemented (executed) by software, firmware, hardware (e.g., the processor 210), or any combination thereof, and may include modules, programs, routines, sets of instructions, or processors for executing one or more functions.

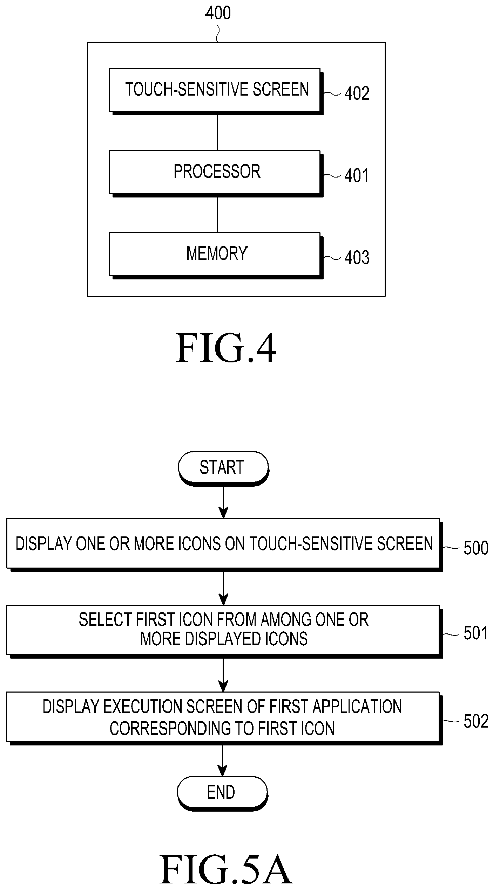

FIG. 4 is a diagram of an electronic device 400, according to an embodiment of the present disclosure.

Referring to FIG. 4, the electronic device 400 may include a processor 401, a touch screen 402, and a memory 403.

According to an embodiment of the present disclosure, the processor 401 may display one or more icons (or buttons) on the touch screen 402. For example, the processor 401 may display, on the touch screen 402, icons (or buttons) (e.g., application execution icons) for executing one or more applications or widgets. The processor 401 may determine whether or not an event for executing an application or a widget corresponding to one icon occurs among one or more icons displayed on the touch screen 402. For example, the processor 401 may determine whether or not a touch input is detected on a first icon corresponding to a first application.

When the first icon is selected, the processor 401 may display an execution screen of the first application corresponding to the first icon on the touch screen 402. According to an embodiment of the present disclosure, the processor 401 may display, on the touch screen 402, an execution screen of the first application including at least one of second objects (e.g., a background object and a configuration object constituting the execution screen) corresponding to at least one of first objects among a plurality of icon objects (e.g., a background object and a configuration object constituting the first icon) included in the first icon. For example, the background object of the first icon may correspond to the background of the first icon, and the configuration object of the first icon may show a feature (or concept, function, or meaning) of the first application corresponding to the first icon. The background object of the execution screen may be a frame of the execution screen, and the configuration object of the execution screen may be an icon, a menu, an image, or a text corresponding to at least one function of the first application.

According to an embodiment of the present disclosure, the processor 401 may sequentially display a first image and a second image corresponding to the first application on the touch screen 402.

For example, the first image may include a second background object, which corresponds to a first background object of the first icon and is greater in size than the first background object, and a second configuration object corresponding to a first configuration object of the first icon. The second background object may be an object obtained by changing at least one of a size, a shape, and a form of the first background object, and the second configuration object may be an object obtained by changing at least one of a size, a shape, and a form of the first configuration object.

The second image may be an execution window of the first application, and may include a third background object, which corresponds to the second background object and is greater in size than the second background object, and a third configuration object corresponding to the second configuration object. The third background object may correspond to a frame of an execution window of the first application, and may be an object obtained by changing at least one of a size, a shape, and a form of the second background object. The third configuration object may correspond to at least one function of the first application, and may be an object (e.g., an icon, a menu, an image, or text for executing at least one function) obtained by changing at least one of a size, a shape, and a form of the second configuration object.

According to an embodiment of the present disclosure, when a touch input on the first icon is detected, the processor 401 may display an animation effect including the first icon, the first image, and the second image on the touch screen 402. The first image may include second attribute information obtained by changing first attribute information including at least one of a first shape, a first size, a first color, first transparency (opacity), or a first position with respect to one or more icon objects constituting the first icon into at least one of a second shape, a second size, a second color, second transparency, or a second position. The second image may include third attribute information obtained by changing the second attribute information into at least one of a third shape, a third size, a third color, third transparency, or a third position. For example, when the first configuration object included in the first icon is located at the center of the first background object, the processor 401 may change the size of the first background object into the size of the second background object in sequence (or in stages), and may change the shape of the first configuration object into the shape of the second configuration object in sequence while shifting the first configuration object located in the center of the first background object to the lower portion of the first background object in sequence, thereby displaying the same at the lower portion of the second background object.

According to an embodiment of the present disclosure, when the first icon is touched, the processor 401 may identify a position (e.g., coordinate values) of the first icon touched on the touch screen 402, and may display the first icon, the first image, and the second image on the touch screen 402 based on the identified position. For example, if the identified position of the first icon belongs to an upper left side of the touch screen 402, the processor 401 may display the first icon, the first image, and the second image in the direction from the upper left side to the lower right side in sequence (or in stages).

According to an embodiment of the present disclosure, the processor 401 may store usage historical information (e.g., historical information) for the first application in the memory 403, and when the first icon is touched, the processor 401 may display the first icon, the first image, and the second image on the touch screen 402 based on the stored usage history information. For example, when there is a request for termination of the first application in progress, the processor 401 may store usage history information for the first application in the memory 403 in order to thereby terminate the first application in progress. Afterwards, when the first icon is touched, the processor 401 may display the first icon, the first image, and the second image on the touch screen 402, wherein the second image may be configured with an application execution window before termination based on the stored usage history information.

According to an embodiment of the present disclosure, when a touch input for terminating an execution screen of the first application is received, the processor 401 may terminate the execution screen of the first application, and may display the first icon corresponding to the execution screen of the first application on the touch screen 402 again.

The touch screen 402 may display one or more icons, and when a first icon is touched among the one or more icons, the touch screen 402 may display an execution screen of the first application, which includes at least one of second objects corresponding to at least one of first objects of the first icon. According to an embodiment of the present disclosure, the touch screen 402 may display the first icon, the first image, and the second image in sequence.

The memory 403 may store information (or data) to be used for displaying the execution screen of the first application, which includes at least one of the second objects corresponding to at least one of the first objects of the first icon. According to an embodiment of the present disclosure, the memory 403 may store information (or data) to be used to sequentially display the first icon, the first image, and the second image.

The electronic device 400, according to an embodiment of the present disclosure, may include a touch screen 402 that displays one or more application execution icons; and a processor 401 that is electrically connected to the touch screen 402, wherein the processor 401 may be configured to display an execution screen of a first application corresponding to a first icon when the first icon is selected from among the one or more application execution icons, and wherein the execution screen of the first application may be configured to display at least one of second objects corresponding to at least one of first objects among a plurality of icon objects included in the first icon.

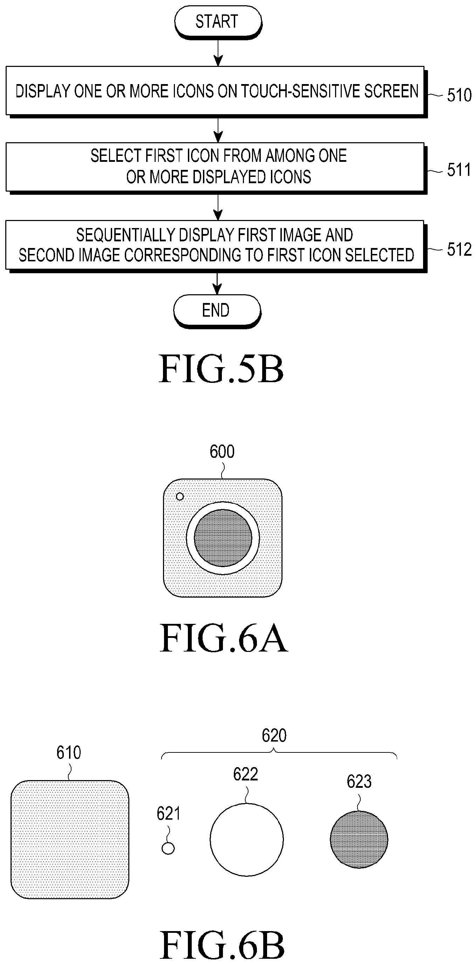

FIGs. 5A and 5B are flowcharts of a method for providing a user interface using icons, according to an embodiment of the present disclosure.

Referring to FIG. 5A, steps 500 through 502 may be performed by one of the electronic devices 101, 102, 104, 201, or 400, the server 106, the processors 120, 210, or 401, or the program module 310.

In step 500, the electronic device 400 (e.g., the processor 401) may display one or more icons on the touch screen 402. According to an embodiment of the present disclosure, the one or more icons may be intended to execute one or more applications, widgets, or functions.

In step 501, the electronic device 400 may select a first icon from among the one or more displayed icons. For example, the electronic device 400 may detect a touch input for the first icon.

In step 502, the electronic device 400 may display an execution screen of a first application corresponding to the first icon. The execution screen may include at least one of second objects obtained by changing attribute information (e.g., one of a size, a shape, a form, or the like) of at least one of first objects constituting the first icon.

Referring to FIG. 5B, steps 510 through 512 may be performed by one of the electronic devices 101, 102, 104, 201, or 400, the server 106, the processors 120, 210, or 401, or the program module 310.

In step 510, the electronic device 400 may display one or more icons on the touch screen 402. According to an embodiment of the present disclosure, the one or more icons may be intended to execute one or more applications, widgets, or functions.

In step 511, the electronic device 400 may select a first icon from among the one or more displayed icons. For example, the electronic device 400 may detect a touch input for the first icon.

In step 512, the electronic device 400 may sequentially display a first image and a second image corresponding to the selected first icon. For example, the electronic device 400 may display a first image including a second background object, which corresponds to a first background object constituting the first icon and is greater in size than the first background object; and a second configuration object corresponding to a first configuration object. The electronic device 400 may display a second image including a third background object, which corresponds to the second background object and is greater in size than the second background object; and a third configuration object corresponding to the second configuration object.

According to an embodiment of the present disclosure, a method of operating an electronic device includes displaying one or more application execution icons on a touch screen; and displaying an execution screen of a first application corresponding to a first icon when the first icon is selected from among the one or more application execution icons, wherein the execution screen of the first application may display at least one of second objects corresponding to at least one of first objects among a plurality of icon objects included in the first icon.

FIGs. 6A and 6B are diagrams of a first icon, according to an embodiment of the present disclosure.

Referring to FIGS. 6A and 6B, the first icon 600 includes one or more icon objects (e.g., at least one of first objects) as shown in FIG. 6A. As shown in FIG. 6B, the one or more icon objects may include a background object 610 (e.g., a first background object) illustrating the background (e.g., a background image) of the icon and a configuration object 620 (e.g., a first configuration object) that illustrates (or represents) a feature (or concept, function, or meaning) of an application or widget corresponding to the first icon and corresponds to at least one of representative images, letters, photos, and the like. The one or more icon objects may be combined in layers to form the first icon 600 as a single aggregation. For example, the first icon 600 may be configured by combining the background object 610 and one or more sub-configuration objects 621, 622, and 623 included in the configuration object 620 in the form of a layer.

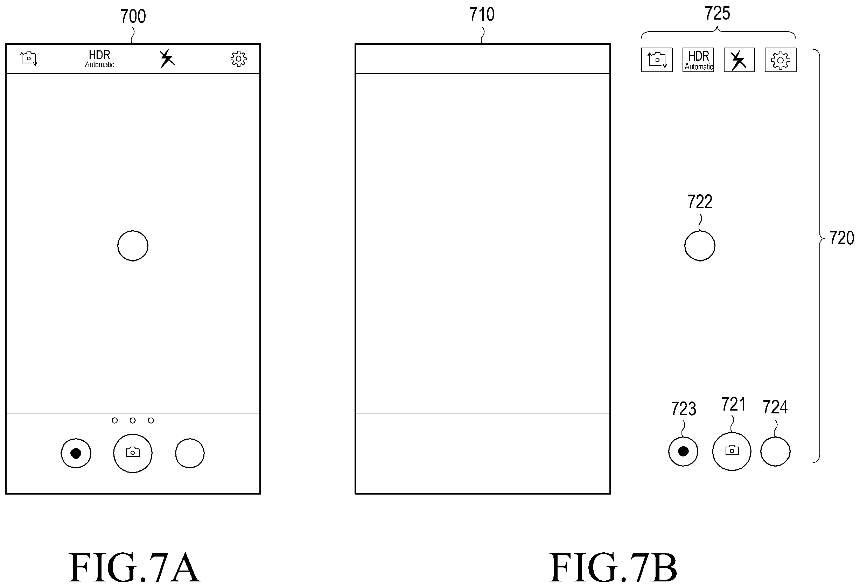

FIGs. 7A and 7B are diagrams of an execution screen of a first application, according to an embodiment of the present disclosure.

Referring to FIGs. 7A and 7B, an execution screen 700 of a first application corresponding to the second image, as shown in FIG. 7A, may include a background object 710 (e.g., a third background object) corresponding to a background image (or a frame) and a configuration object 720 (e.g., a third configuration object) corresponding to at least one of icons, menus, buttons, images, letters, photos, symbols, numbers, and the like as shown in FIG. 7B. The background object 710 and the configuration object 720 may be combined in layers to form the execution screen 700 of the first application as a single aggregation. For example, the execution screen 700 of the first application may be configured by combining the background object 710 and one or more sub-configuration objects 721, 722, 723, 724, and 725 included in the configuration objects 720 in the form of a layer.

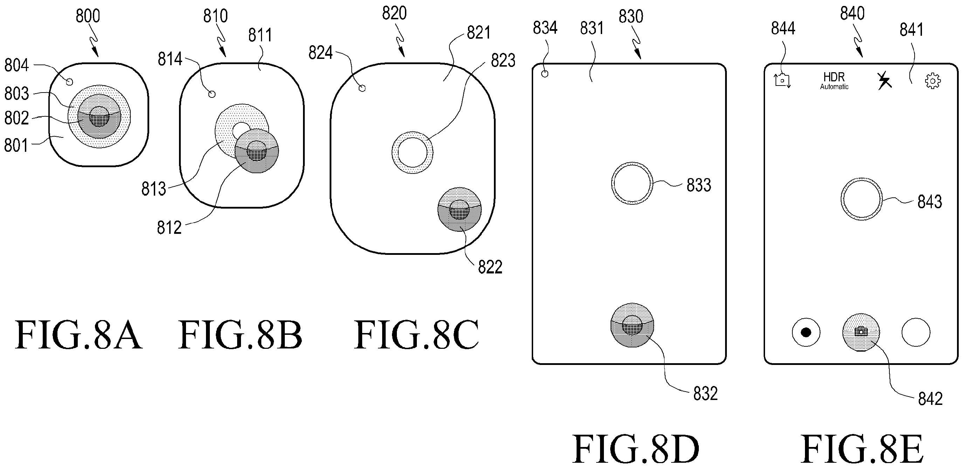

FIGs. 8A, 8B, 8C, 8D, and 8E are diagrams illustrating a method of displaying an execution screen of an application using icons, according to an embodiment of the present disclosure.

Referring to FIGs. 8A, 8B, 8C, 8D, and 8E, the electronic device 400 (e.g., the processor 401) may display a first icon 800 corresponding to a camera application on the touch screen 402. When the first icon 800 is touched, the electronic device 400 may display, on the touch screen 402, a first image 810, a second image 820, a third image 830, and a fourth image 840 corresponding to the camera application in sequence.

According to an embodiment of the present disclosure, the first icon 800 may include a first background object 801 and a first configuration object 802, 803, or 804 as shown in FIG. 8A. The first image 810 may include a second background object 811 and a second configuration object 812, 813, or 814 as shown in FIG. 8B. The second image 820 may include a third background object 821 and a third configuration object 822, 823, or 824 as shown in FIG. 8C. The third image 830 may include a fourth background object 831 and a fourth configuration object 832, 833, or 834 as shown in FIG. 8D. The fourth image 840 may include a fifth background object 841 and a fifth configuration object 842, 843, or 844 as shown in FIG. 8E. For example, the fourth image 840 may be an execution screen of a camera application.

According to an embodiment of the present disclosure, the electronic device 400 may display the first background object 801 and one or more sub-configuration objects 802, 803, and 804 constituting the first configuration object, which constitute the first icon 800, as shown in FIG. 8A.

According to an embodiment of the present disclosure, as shown in FIG. 8B, the electronic device 400 may display, on the second background object 811 greater in size than the first background object 801 the first sub-configuration object 812 of the second configuration object, of which the size has been changed, at a position corresponding to the first sub-configuration object 802 of the first configuration object; the second sub-configuration object 813 of the second configuration object, of which the size or shape has been changed, at a position corresponding to the second sub-configuration object 803 of the first configuration object; and the third sub-configuration object 814 of the second configuration object at a position corresponding to the third sub-configuration object 804 of the first configuration object. For example, the distance between the center of the first background object 801 and the second sub-configuration object 803 of the first configuration object may be less than the distance between the center of the second background object 811 and the second sub-configuration object 813 of the second configuration object.

According to an embodiment of the present disclosure, as shown in FIG. 8C, the electronic device 400 may display, on the third background object 821 greater in size than the second background object 811 the first sub-configuration object 822 of the third configuration object at a position corresponding to the first sub-configuration object 812 of the second configuration object; the second sub-configuration object 823 of the third configuration object, of which the shape has been changed, at a position corresponding to the second sub-configuration object 813 of the second configuration object; and the third sub-configuration object 824 of the third configuration object at a position corresponding to the third sub-configuration object 814 of the second configuration object. For example, the distance between the center of the second background object 811 and the second sub-configuration object 813 of the second configuration object may be less than the distance between the center of the third background object 821 and the second sub-configuration object 823 of the third configuration object.

According to an embodiment of the present disclosure, as shown in FIG. 8D, the electronic device 400 may display, on the fourth background object 831 greater in size than the third background object 821 the first sub-configuration object 832 of the fourth configuration object at a position corresponding to the first sub-configuration object 822 of the third configuration object; the second sub-configuration object 833 of the fourth configuration object, of which the shape has been changed, at a position corresponding to the second sub-configuration object 823 of the third configuration object; and the third sub-configuration object 834 of the fourth configuration object at a position corresponding to the third sub-configuration object 824 of the third configuration object. For example, the distance between the center of the third background object 821 and the second sub-configuration object 823 of the third configuration object may be less than the distance between the center of the fourth background object 831 and the second sub-configuration object 833 of the fourth configuration object.

According to an embodiment of the present disclosure, as shown in FIG. 8E, the electronic device 400 may display, on the fifth background object 841 corresponding to the fourth background object 831 the first sub-configuration object 842 of the fifth configuration object, of which the shape has been changed, at a position corresponding to the first sub-configuration object 832 of the fourth configuration object; the second sub-configuration object 843 of the fifth configuration object at a position corresponding to the second sub-configuration object 833 of the fourth configuration object; and the third sub-configuration object 844 of the fifth configuration object, of which the shape has been changed, at a position corresponding to the third sub-configuration object 834 of the fourth configuration object. For example, the first sub-configuration object 832 of the fourth configuration object may be located on a shutter button in an execution window of a camera application. The shutter button may be located at the center of the lower portion, or in the right or left side of the lower portion, of the execution screen of the camera application.

According to an embodiment of the present disclosure, the electronic device 400 may sequentially display the second background object 811 greater in size than the first background object 801, the third background object 821 greater in size than the second background object 811, the fourth background object 831 greater in size than the third background object 821, and the fifth background object 841 corresponding to the fourth background object 831. For example, the fourth background object 831 and the fifth background object 841 may have the same size.

According to an embodiment of the present disclosure, the electronic device 400, as shown in FIG. 8B, may display the first sub-configuration object 812 of the second configuration object, which is smaller than the first sub-configuration object 802 of the first configuration object and has been shifted from the position of the first sub-configuration object 802 of the first configuration object to a first position (e.g., a position located a first distance apart from the center of the second background object 811). The electronic device 400 may display the second sub-configuration object 813 of the second configuration object, which is smaller than the second sub-configuration object 803 of the first configuration object and has been changed from the shape of the first sub-configuration object 802 of the first configuration object into a first shape (e.g., a ring shape having a first width). The electronic device 400 may display the third sub-configuration object 814 of the second configuration object, which has been shifted from the position of the third sub-configuration object 804 of the first configuration object to a second position (e.g., an upper left side of the second background object 811).

According to an embodiment of the present disclosure, the electronic device 400, as shown in FIG. 8C, may display the first sub-configuration object 822 of the third configuration object, which has been shifted from the position of the first sub-configuration object 812 of the second configuration object to a third position (e.g., a position located a second distance, which is farther than the first distance, apart from the center of the second background object 811). The electronic device 400 may display the second sub-configuration object 823 of the third configuration object, which is smaller than the second sub-configuration object 813 of the second configuration object and has been changed from the shape of the second sub-configuration object of the second configuration object into a second shape (e.g., a ring shape having a second width less than the first width). The electronic device 400 may display the third sub-configuration object 824 of the third configuration object on the third background object 821, which has been shifted from the position of the third sub-configuration object 814 of the second configuration object to a fourth position (e.g., an upper left side of the third background object 821).

According to an embodiment of the present disclosure, the electronic device 400, as shown in FIG. 8D, may display the first sub-configuration object 832 of the fourth configuration object, which has been shifted from the position of the first sub-configuration object 822 of the third configuration object to a fifth position (e.g., a position located a third distance, which is farther than the second distance, apart from the center of the second background object 811). For example the fourth position may be a lower center of the fourth background object 831. The electronic device 400 may display the second sub-configuration object 833 of the fourth configuration object, which has been changed from the shape of the second sub-configuration object 823 of the third configuration object into a third shape (e.g., a ring shape having a third width less than the second width). The electronic device 400 may display the third sub-configuration object 834 of the fourth configuration object, which has been shifted from the position of the third sub-configuration object 824 of the third configuration object to a sixth position (e.g., an upper left side of the fourth background object 831).

According to an embodiment of the present disclosure, the electronic device 400, as shown in FIG. 8E, may display the first sub-configuration object 842 of the fifth configuration object, which is smaller than the first sub-configuration object 832 of the fourth configuration object and has been changed from the shape of the first sub-configuration object 802 of the first configuration object into a fourth shape (e.g., a circular shape including an image of a camera shape). The electronic device 400 may display the second sub-configuration object 843 of the fifth configuration object corresponding to the second sub-configuration object 833 of the fourth configuration object. For example, the second sub-configuration object 843 of the fifth configuration object may have the same attribute information as the second sub-configuration object 833 of the fourth configuration object. The electronic device 400 may display the third sub-configuration object 844 of the fifth configuration object, which has been changed from the shape of the third sub-configuration object 834 of the fourth configuration object into a fifth shape (e.g., a camera shape).

Accordingly, the size, position and shape of at least one icon object constituting the icon are gradually changed into the execution screen of an application corresponding to the icon, thereby connecting the characteristics of the icon and the characteristics of the application execution screen, so that the user can be provided with a more intuitive user experience (UX) for the application corresponding to the icon.

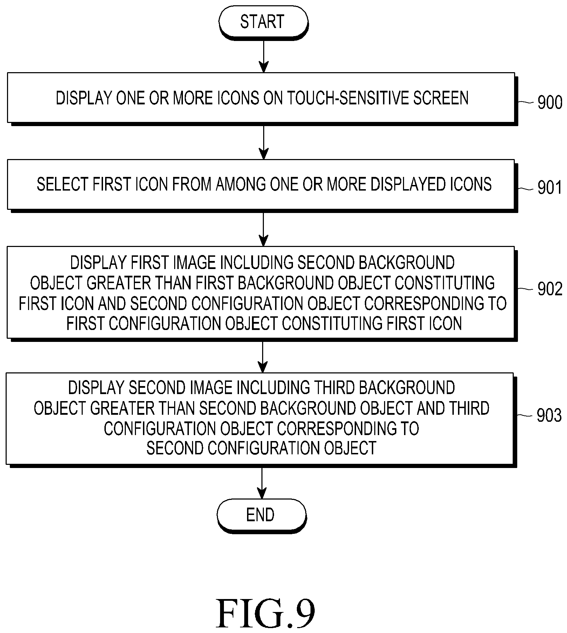

FIG. 9 is a flowchart of a method for providing a user interface using icons, according to an embodiment of the present disclosure. Steps 900 through 903 may be performed by one of the electronic devices 101, 102, 104, 201, or 400, the server 106, the processors 120, 210, or 401, or the program module 310.

Referring to FIG. 9, in step 900, an electronic device 400 (e.g., the processor 401) may display one or more icons on the touch screen 402. In step 901, the electronic device 400 may select a first icon from among the one or more displayed icons. In step 902, the electronic device 400 may display a first image including a second background object greater in size than a first background object constituting the first icon and a second configuration object corresponding to a first configuration object constituting the first icon. In step 903, the electronic device 400 may display a second image including a third background object greater in size than the second background object and a third configuration object corresponding to the second configuration object.

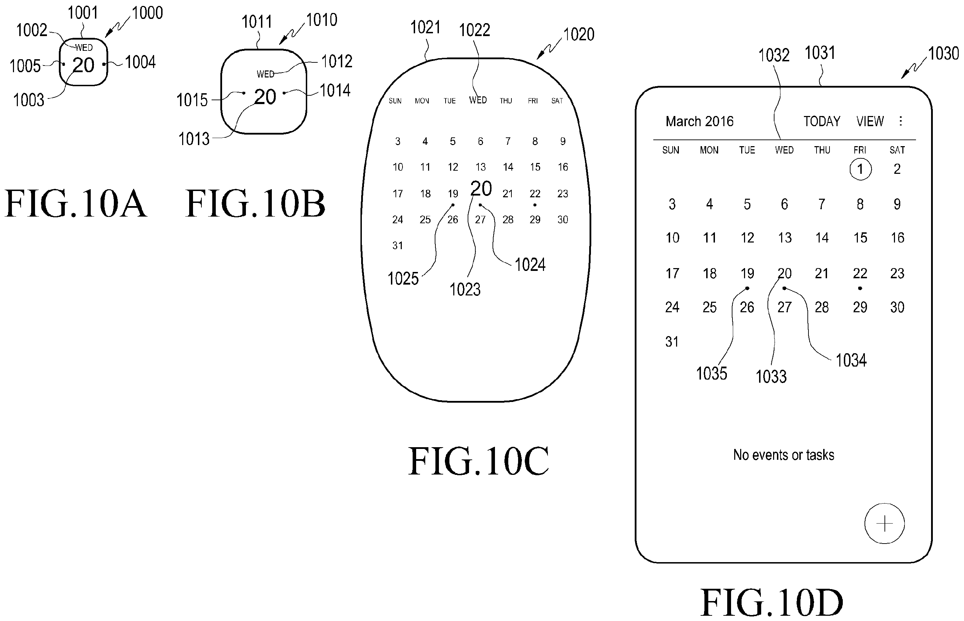

FIGs. 10A, 10B, 10C, and 10D are diagrams illustrating a method for displaying an execution screen of an application using icons, according to an embodiment of the present disclosure.

Referring to FIGs. 10A, 10B, 10C, and 10D, the electronic device 400 (e.g., the processor 401) may display a second icon 1000 corresponding to a calendar application on the touch screen 402. When the second icon 1000 is touched, the electronic device 400 may sequentially display a first image 1010, a second image 1020, and a third image 1030 corresponding to the calendar application on the touch screen 402.

According to an embodiment of the present disclosure, the second icon 1000 may include a first background object 1001 and a first configuration object 1002, 1003, 1004, or 1005 as shown in FIG. 10A. The first image 1010 may include a second background object 1011 and a second configuration object 1012, 1013, 1014, or 1015 as shown in FIG. 10B. The second image 1020 may include a third background object 1021 and a third configuration object 1022, 1023, 1024, or 1025 as shown in FIG. 10C. The third image 1030 may include a fourth background object 1031 and a fourth configuration object 1032, 1033, 1034, or 1035 as shown in FIG. 10D. For example, the third image 1030 may be an execution screen of the calendar application.

According to an embodiment of the present disclosure, the electronic device 400, as shown in FIG. 10A, may display the first background object 1001 and one or more sub-configuration objects 1002, 1003, 1004, and 1005 constituting the first configuration object, which constitute the second icon 1000.

According to an embodiment of the present disclosure, as shown in FIG. 10B, the electronic device 400 may display, on the second background object 1011 greater in size than the first background object 1001 the first sub-configuration object 1012 of the second configuration object at a position corresponding to the first sub-configuration object 1002 of the first configuration object; the second sub-configuration object 1013 of the second configuration object at a position corresponding to the second sub-configuration object 1003 of the first configuration object; the third sub-configuration object 1014 of the second configuration object at a position corresponding to the third sub-configuration object 1004 of the first configuration object; and the fourth sub-configuration object 1015 of the second configuration object at a position corresponding to the fourth sub-configuration object 1005 of the first configuration object.

According to an embodiment of the present disclosure, the electronic device 400, as shown in FIG. 10C, may display, on the third background object 1021 greater in size than the second background object 1011 the first sub-configuration object 1022 of the third configuration object at a position corresponding to the first sub-configuration object 1012 of the second configuration object, among a series of text strings arranged in the third background object 1021; the second sub-configuration object 1023 of the third configuration object at a position corresponding to the second sub-configuration object 1013 of the second configuration object, among a series of text strings (numbers) arranged in the third background object 1021; the third sub-configuration object 1024 of the third configuration object at a position corresponding to the third sub-configuration object 1014 of the second configuration object, among a series of symbols arranged in the third background object 1021; and the fourth sub-configuration object 1025 of the third configuration object at a position corresponding to the fourth sub-configuration object 1015 of the second configuration object, among a series of symbols arranged in the third background object 1021.

According to an embodiment of the present disclosure, the electronic device 400, as shown in FIG. 10D, may display, on the fourth background object 1031 greater in size than the third background object 1021 the first sub-configuration object 1032 of the fourth configuration object at a position corresponding to the first sub-configuration object 1022 of the third configuration object, among a series of text strings arranged in the fourth background object 1031; the second sub-configuration object 1033 of the fourth configuration object, which is smaller than the second sub-configuration object 1023 of the third configuration object, at a position corresponding to the second sub-configuration object 1023 of the third configuration object, among a series of text strings (numbers) arranged in the fourth background object 1031; the third sub-configuration object 1034 of the fourth configuration object at a position corresponding to the third sub-configuration object 1024 of the third configuration object, among a series of symbols arranged in the fourth background object 1031; and the fourth sub-configuration object 1035 of the fourth configuration object at a position corresponding to the fourth sub-configuration object 1025 of the third configuration object, among a series of symbols arranged in the fourth background object 1031. For example, the second sub-configuration object 1032 of the fourth configuration object may be text representing a day of week, and the third sub-configuration object 1033 of the fourth configuration object may be text representing date.

According to an embodiment of the present disclosure, the electronic device 400 may sequentially display the second background object 1011 greater in size than the first background object 1001; the third background object 1021 greater in size than the second background object 1011; and the fourth background object 1031 greater in size than the third background object 1021.

According to an embodiment of the present disclosure, the electronic device 400, as shown in FIG. 10B, may display the first sub-configuration object 1012 of the second configuration object, which has been shifted from the position of the first sub-configuration object 1002 of the first configuration object to a first position (e.g., a position located a certain distance apart from the center of the second background object 1011). The electronic device 400 may display the second sub-configuration object 1013 of the second configuration object at a second position (e.g., the center of the second background object 1011) corresponding to the second sub-configuration object 1003 of the first configuration object. The electronic device 400 may display the third sub-configuration object 1014 of the second configuration object at a third position (e.g., the right side of the second sub-configuration object 1013 of the second configuration object) corresponding to the third sub-configuration object 1004 of the first configuration object. The electronic device 400 may display the fourth sub-configuration object 1015 of the second configuration object at a fourth position (e.g., the left side of the second sub-configuration object 1013 of the second configuration object) corresponding to the fourth sub-configuration object 1005 of the first configuration object.

According to an embodiment of the present disclosure, the electronic device 400, as shown in FIG. 10C, may display the first sub-configuration object 1022 of the third configuration object at a position of text (e.g., WED) corresponding to the first sub-configuration object 1012 of the second configuration object, among a series of text strings arranged in the third background object 1021. The electronic device 400 may display the second sub-configuration object 1023 of the third configuration object at a position of a number (e.g., 20) corresponding to the second sub-configuration object 1013 of the second configuration object, among a series of numbers arranged in the third background object 1021. The electronic device 400 may display the third sub-configuration object 1024 of the third configuration object at a fifth position (e.g., the lower side of the second sub-configuration object 1023 of the third configuration object) corresponding to the third sub-configuration object 1014 of the second configuration object, among a series of symbols arranged in the third background object 1021. The electronic device 400 may display the fifth sub-configuration object 1025 of the third configuration object at a sixth position {e.g., the lower side of a certain number (e.g., 19)} corresponding to the fourth sub-configuration object 1015 of the second configuration object, among a series of symbols arranged in the third background object 1021.

According to an embodiment of the present disclosure, the electronic device 400, as shown in FIG. 10D, may display the first sub-configuration object 1032 of the fourth configuration object at a position of text (e.g., WED) corresponding to the first sub-configuration object 1022 of the third configuration object, among a series of text strings arranged in the fourth background object 1031. The electronic device 400 may display the second sub-configuration object 1033 of the fourth configuration object, which is smaller than the second sub-configuration object 1023 of the third configuration object, at a position of a number (e.g., 20) corresponding to the second sub-configuration object 1023 of the third configuration object, among a series of numbers arranged in the fourth background object 1031. The electronic device 400 may display the third sub-configuration object 1034 of the fourth configuration object at a seventh position (e.g., the lower side of the second sub-configuration object 1033 of the fourth configuration object) corresponding to the third sub-configuration object 1024 of the third configuration object, among a series of symbols arranged in the fourth background object 1031. The electronic device 400 may display the fifth sub-configuration object 1035 of the fourth configuration object at an eighth position {e.g., the lower side of a certain number (e.g., 19)} corresponding to the fourth sub-configuration object 1025 of the third configuration object, among a series of symbols arranged in the fourth background object 1031. The fourth sub-configuration object 1034 and the fifth sub-configuration object 1035 of the fourth configuration object may be indicators showing certain stored information.

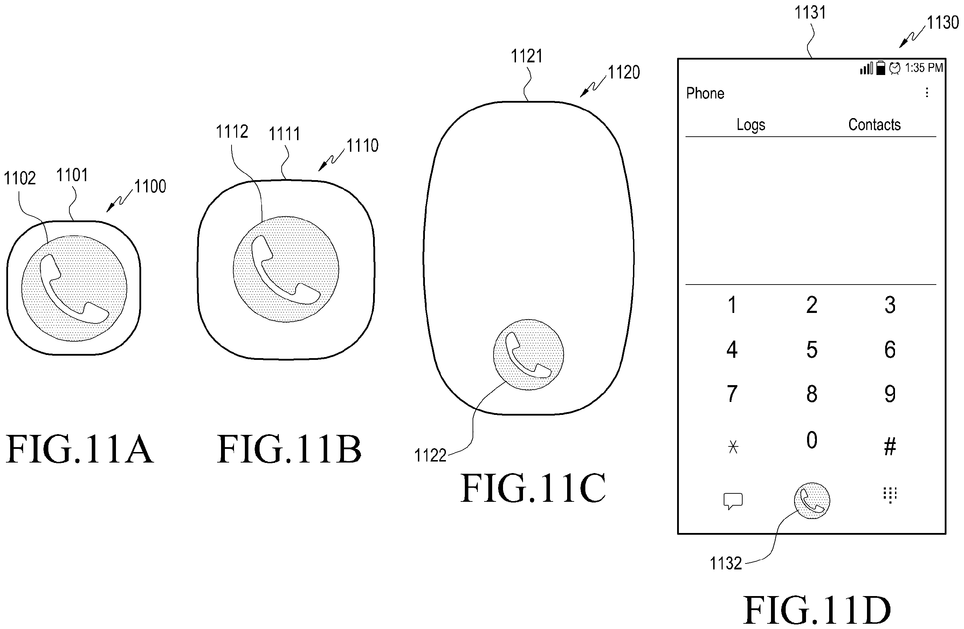

FIGs. 11A, 11B, 11C, and 11D are diagrams illustrating a user interface using icons, according to an embodiment of the present disclosure.

Referring to FIGs. 11A, 11B, 11C, and 11D, the electronic device 400 (e.g., the processor 401) may display a third icon 1100 corresponding to a telephone application on the touch screen 402. When the third icon 1100 is touched, the electronic device 400 may sequentially display a first image 1110, a second image 1120, and a third image 1130 corresponding to the telephone application on the touch screen 402.

According to an embodiment of the present disclosure, the third icon 1100 may include a first background object 1101 and a first configuration object 1102 as shown in FIG. 11A. The first image 1110 may include a second background object 1111 and a second configuration object 1112 as shown in FIG. 11B. The second image 1120 may include a third background object 1121 and a third configuration object 1122 as shown in FIG. 11C. The third image 1030 may include a fourth background object 1131 and a fourth configuration object 1132 as shown in FIG. 11D. For example, the third image 1130 may be an execution screen of the telephone application.

According to an embodiment of the present disclosure, the electronic device 400, as shown in FIG. 11A, may display the first background object 1101 and the first configuration object 1102 constituting the third icon 1100.

According to an embodiment of the present disclosure, as shown in FIG. 11B, the electronic device 400 may display the second configuration object 1112 at a position corresponding to the first configuration object 1102 on the second background object 1111 greater in size than the first background object 1101. For example, the electronic device 400 may display the second configuration object 1112 at the center of the second background object 1111.

According to an embodiment of the present disclosure, the electronic device 400, as shown in FIG. 11C, may display the third configuration object 1122 smaller than the second configuration object 1112 at a position corresponding to the second configuration object 1112 on a third background object 1121 greater in size than the second background object 1111. For example, the distance between the center of the second background object 1111 and the second configuration object 1112 may be less than the distance between the center of the third background object 1121 and the third configuration object 1122.

According to an embodiment of the present disclosure, the electronic device 400, as shown in FIG. 11D, may display the fourth configuration object 1132 smaller than the third configuration object 1122 at a position corresponding to the third configuration object 1122 on a fourth background object 1131 greater in size than the third background object 1121. For example, the fourth configuration object 1132 may be located on a call button in an execution window of the telephone application. The distance between the center of the third background object 1121 and the third configuration object 1122 may be less than the distance between the center of the fourth background object 1131 and the fourth configuration object 1132.

According to an embodiment of the present disclosure, the electronic device 400 may sequentially display the second background object 1111 greater in size than the first background object 1101; the third background object 1121 greater in size than the second background object 1111; and the fourth background object 1131 greater in size than the third background object 1121.

According to an embodiment of the present disclosure, the electronic device 400, as shown in FIG. 11B, may display the second sub-configuration object 1112 at a first position (e.g., the center of the second background object 1111) corresponding to the position of the first configuration object 1102.

According to an embodiment of the present disclosure, the electronic device 400, as shown in FIG. 11C, may display the third configuration object 1122 that has been shifted from the position of the second configuration object 1112 to a second position (e.g., the lower center of the third background object 1121) and has been changed to have a first size smaller than the size of the second configuration object 1112.

According to an embodiment of the present disclosure, the electronic device 400, as shown in FIG. 11D, may display the fourth configuration object 1132 that has been shifted from the position of the third configuration object 1122 to a third position (e.g., the lower center of the fourth background object 1131) and has been changed to have a second size smaller than the first size.

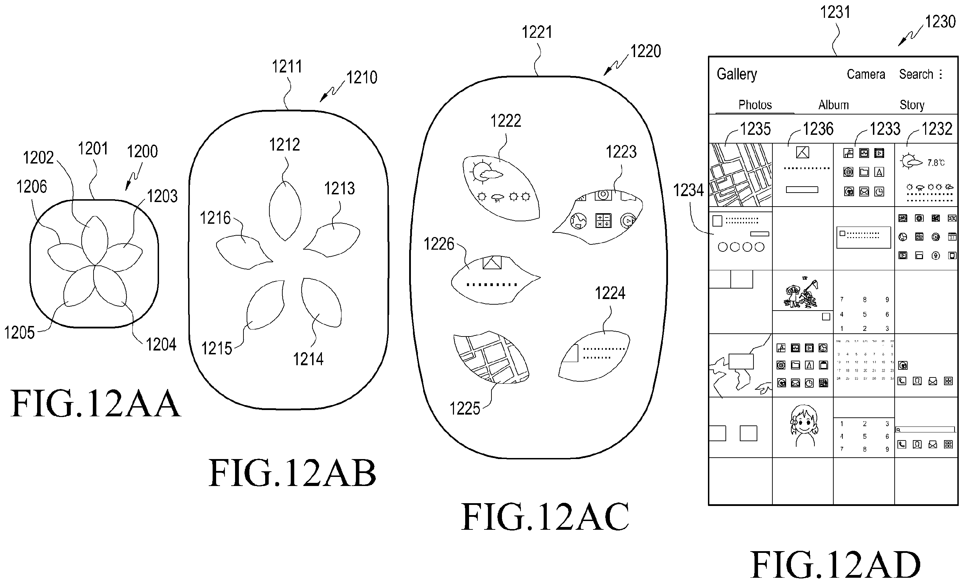

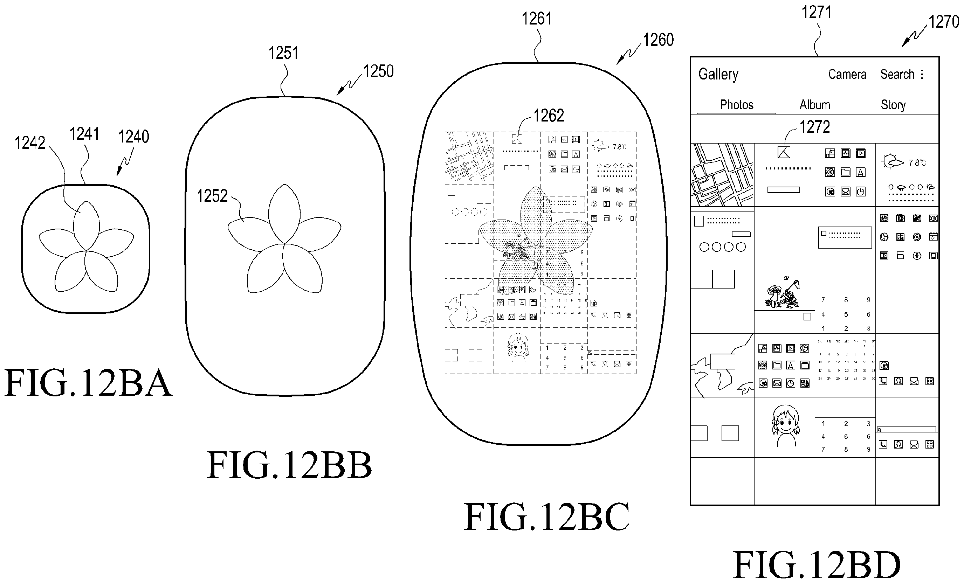

FIGs. 12AA, 12AB, 12AC, 12AD, 12BA, 12BB, 12BC, and 12BD are diagrams of a user interface using icons, according to an embodiment of the present disclosure.

Referring to FIGs. 12AA, 12AB, 12AC, and 12AD, the electronic device 400 (e.g., the processor 401) may display a fourth icon 1200 corresponding to a gallery (or photo) application on the touch screen 402. When the fourth icon 1200 is touched, the electronic device 400 may sequentially display a first image 1210, a second image 1220, and a third image 1230 corresponding to the gallery (or photo) application on the touch screen 402.

According to an embodiment of the present disclosure, the fourth icon 1200 may include a first background object 1201 and sub-configuration objects 1202, 1203, 1204, 1205, and 1206 of a first configuration object as shown in FIG. 12AA. The first image 1210 may include a second background object 1211 and sub-configuration objects 1212, 1213, 1214, 1215, and 1216 of a second configuration object as shown in FIG. 12AB. The second image 1220 may include a third background object 1221 and sub-configuration objects 1222, 1223, 1224, 1225, and 1226 of a third configuration object as shown in FIG. 12AC. The third image 1230 may include a fourth background object 1231 and sub-configuration objects 1232, 1233, 1234, 1235, and 1236 of a fourth configuration object as shown in FIG. 12AD. For example, the third image 1230 may be an execution screen of the gallery (or photo) application.

According to an embodiment of the present disclosure, the electronic device 400, as shown in FIG. 12AA, may display the first background object 1201; and the first sub-configuration object 1202, the second sub-configuration object 1203, the third sub-configuration object 1204, the fourth sub-configuration object 1205, and the fifth sub-configuration object 1206 of the first configuration object, which constitute the fourth icon 1200.

According to an embodiment of the present disclosure, as shown in FIG. 12AB, the electronic device 400 may display the first sub-configuration object 1212 of the second configuration object at a first position corresponding to the first sub-configuration object 1202 of the first configuration object on the second background object 1211 greater in size than the first background object 1201. For example, the electronic device 400 may display the first sub-configuration object 1212 of the second configuration object at a first position shifted a first distance from the center of the second background object 1211. The first position may be a position shifted from the center of the second background object 1211 toward the upper side thereof. The electronic device 400, as shown in FIG. 12AB, may display the second sub-configuration object 1213 of the second configuration object at a second position corresponding to the second sub-configuration object 1203 of the first configuration object on the second background object 1211. For example, the electronic device 400 may display the second sub-configuration object 1213 of the second configuration object at a second position shifted a second distance from the center of the second background object 1211. The second position may be a position shifted from the center of the second background object 1211 toward the right side thereof. The electronic device 400, as shown in FIG. 12AB, may display the third sub-configuration object 1214 of the second configuration object at a third position corresponding to the third sub-configuration object 1204 of the first configuration object on the second background object 1211. For example, the electronic device 400 may display the third sub-configuration object 1214 of the second configuration object at a third position shifted a third distance from the center of the second background object 1211. The third position may be a position shifted from the center of the second background object 1211 toward the lower right side thereof. The electronic device 400, as shown in FIG. 12AB, may display the fourth sub-configuration object 1215 of the second configuration object at a fourth position corresponding to the fourth sub-configuration object 1205 of the first configuration object on the second background object 1211. For example, the electronic device 400 may display the fourth sub-configuration object 1215 of the second configuration object at a fourth position shifted a fourth distance from the center of the second background object 1211. The fourth position may be a position shifted from the center of the second background object 1211 toward the lower left side thereof. The electronic device 400, as shown in FIG. 12AB, may display the fifth sub-configuration object 1216 of the second configuration object at a fifth position corresponding to the fifth sub-configuration object 1206 of the first configuration object on the second background object 1211. For example, the electronic device 400 may display the fifth sub-configuration object 1216 of the second configuration object at a fifth position shifted a fifth distance from the center of the second background object 1211. The fifth position may be a position shifted from the center of the second background object 1211 toward the left side thereof.

According to an embodiment of the present disclosure, the first, second, third, fourth, and fifth distances may have any values.

According to an embodiment of the present disclosure, the distance between the center of the first background object 1201 and the first sub-configuration object 1202 of the first configuration object may be less than the distance between the center of the second background object 1211 and the first sub-configuration object 1212 of the second configuration object. The distance between the center of the first background object 1201 and the second sub-configuration object 1203 of the first configuration object may be less than the distance between the center of the second background object 1211 and the second sub-configuration object 1213 of the second configuration object. The distance between the center of the first background object 1201 and the third sub-configuration object 1204 of the first configuration object may be less than the distance between the center of the second background object 1211 and the third sub-configuration object 1214 of the second configuration object. The distance between the center of the first background object 1201 and the fourth sub-configuration object 1205 of the first configuration object may be less than the distance between the center of the second background object 1211 and the fourth sub-configuration object 1215 of the second configuration object. The distance between the center of the first background object 1201 and the fifth sub-configuration object 1206 of the first configuration object may be less than the distance between the center of the second background object 1211 and the fifth sub-configuration object 1216 of the second configuration object.

According to an embodiment of the present disclosure, the electronic device 400, as shown in FIG. 12AC, may display a first sub-configuration object 1222 of the third configuration object, which has been obtained by changing the size and shape of the first sub-configuration object 1212 of the second configuration object, at a sixth position corresponding to the first sub-configuration object 1212 of the second configuration object on the third background object 1221 greater in size than the second background object 1211. For example, the electronic device 400may display the first sub-configuration object 1222 of the third configuration object at any sixth position in the second background object 1211. The electronic device 400, as shown in FIG. 12AC, may display a second sub-configuration object 1223 of the third configuration object, which has been obtained by changing the size and shape of the second sub-configuration object 1213 of the second configuration object, at a seventh position corresponding to the second sub-configuration object 1213 of the second configuration object. For example, the electronic device 400 may display the second sub-configuration object 1223 of the third configuration object at a seventh position different from the sixth position in the second background object 1221. The electronic device 400, as shown in FIG. 12AC, may display a third sub-configuration object 1224 of the third configuration object, which has been obtained by changing the size and shape of the third sub-configuration object 1214 of the second configuration object, at an eighth position corresponding to the third sub-configuration object 1214 of the second configuration object. For example, the electronic device 400 may display the third sub-configuration object 1224 of the third configuration object at an eighth position different from the seventh position in the second background object 1221. The electronic device 400, as shown in FIG. 12AC, may display a fourth sub-configuration object 1225 of the third configuration object, which has been obtained by changing the size and shape of the fourth sub-configuration object 1215 of the second configuration object, at a ninth position corresponding to the fourth sub-configuration object 1215 of the second configuration object. For example, the electronic device 400 may display the fourth sub-configuration object 1225 of the third configuration object at a ninth position different from the eighth position in the second background object 1221. The electronic device 400, as shown in FIG. 12AC, may display a fifth sub-configuration object 1226 of the third configuration object, which has been obtained by changing the size and shape of the fifth sub-configuration object 1215 of the second configuration object, at a tenth position corresponding to the fifth sub-configuration object 1215 of the second configuration object. For example, the electronic device 400 may display the fifth sub-configuration object 1226 of the third configuration object at a tenth position different from the ninth position in the second background object 1221.

According to an embodiment of the present disclosure, the electronic device 400, as shown in FIG. 12AD, may display a first sub-configuration object 1232 of the fourth configuration object at an eleventh position corresponding to the first sub-configuration object 1222 of the third configuration object, among a series of image thumbnails arranged in the fourth background object 1231 greater than the third background object 1221. For example, the electronic device 400 may display, at any eleventh position, a first sub-configuration object 1232 of the fourth configuration object obtained by changing the shape of the first sub-configuration object 1222 of the third configuration object into a first image thumbnail. The electronic device 400, as shown in FIG. 12AD, may display a second sub-configuration object 1233 of the fourth configuration object at a twelfth position corresponding to the second sub-configuration object 1223 of the third configuration object, among a series of image thumbnails arranged in the fourth background object 1231. For example, the electronic device 400 may display the second sub-configuration object 1233 of the fourth configuration object, which has been obtained by changing the shape of the second sub-configuration object 1223 of the third configuration object into the second image thumbnail, at a twelfth position different from the eleventh position. The electronic device 400, as shown in FIG. 12AD, may display a third sub-configuration object 1234 of the fourth configuration object at a thirteenth position corresponding to the third sub-configuration object 1224 of the third configuration object, among a series of image thumbnails arranged in the fourth background object 1231. For example, the electronic device 400 may display the third sub-configuration object 1234 of the fourth configuration object, which has been obtained by changing the shape of the third sub-configuration object 1224 of the third configuration object into a third image thumbnail, at a thirteenth position different from the twelfth position. The electronic device 400, as shown in FIG. 12AD, may display a fourth sub-configuration object 1235 of the fourth configuration object at a fourteenth position corresponding to the fourth sub-configuration object 1225 of the third configuration object, among a series of image thumbnails arranged in the fourth background object 1231. For example, the electronic device 400 may display the fourth sub-configuration object 1235 of the fourth configuration object, which has been obtained by changing the shape of the fourth sub-configuration object 1225 of the third configuration object into a fourth image thumbnail, at a fourteenth position different from the thirteenth position. The electronic device 400, as shown in FIG. 12AD, may display a fifth sub-configuration object 1236 of the fourth configuration object at a fifteenth position corresponding to the fifth sub-configuration object 1226 of the third configuration object, among a series of image thumbnails arranged in the fourth background object 1231. For example, the electronic device 400 may display the fifth sub-configuration object 1236 of the fourth configuration object, which has been obtained by changing the shape of the fifth sub-configuration object 1226 of the third configuration object into a fifth image thumbnail, at a fifteenth position different from the fourteenth position.

Referring to FIGs. 12BA, 12BB, 12BC, and 12BD, when the fourth icon 1240 is touched, the electronic device 400 may sequentially display a first image 1250, a second image 1260, and a third image 1270 corresponding to the gallery (or photo) application on the touch screen 402.

According to an embodiment of the present disclosure, the fourth icon 1240 may include a first background object 1241 and a first configuration object 1242 as shown in FIG. 12BA. The first image 1250 may include a second background object 1251 and a second configuration object 1252 as shown in FIG. 12BB. The second image 1260 may include a third background object 1261 and a third configuration object 1262 as shown in FIG. 12BC. The third image 1270 may include a fourth background object 1271 and a fourth configuration object 1272 as shown in FIG. 12BD. For example, the third image 1270 may be an execution screen of the gallery (or photo) application.

According to an embodiment of the present disclosure, the electronic device 400, as shown in FIG. 12BA, may display the first background object 1241 and the second configuration object 1242, which constitute the fourth icon 1240.

According to an embodiment of the present disclosure, as shown in FIG. 12BB, the electronic device 400 may display the second configuration object 1252 at a first position corresponding to the first configuration object 1242 on the second background object 1251 greater in size than the first background object 1241. For example, the electronic device 400 may display the second configuration object 1252 at the center (e.g., the first position) of the second background object 1251.

According to an embodiment of the present disclosure, the electronic device 400, as shown in FIG. 12BC, may display a third configuration object 1262, which has been obtained by changing the shape of the second configuration object 1252, at a second position corresponding to the second configuration object 1252 on the third background object 1261 greater in size than the second background object 1251. For example, the electronic device 400 may display the third configuration object 1262 at the center (e.g., the second position) of the third background object 1261.

According to an embodiment of the present disclosure, the electronic device 400 may display the second configuration object 1252 so as to fade out while displaying the third configuration object 1262 so as to fade in at the second position corresponding to the second configuration object 1252. The electronic device 400, as shown in FIG. 12BD, may display a fourth configuration object 1272 greater in size than the third configuration object 1262 at a third position corresponding to the third configuration object 1262 on the fourth background object 1271 greater in size than the third background object 1261. For example, the electronic device 400 may display the fourth configuration object 1272 in the lower side (e.g., the third position) of the fourth background object 1271. The fourth configuration object 1272 may be a thumbnail list in which one or more image thumbnails are listed.

FIGSs. 13A, 13B, 13C, and 13D are diagrams of a user interface using icons, according to an embodiment of the present disclosure.

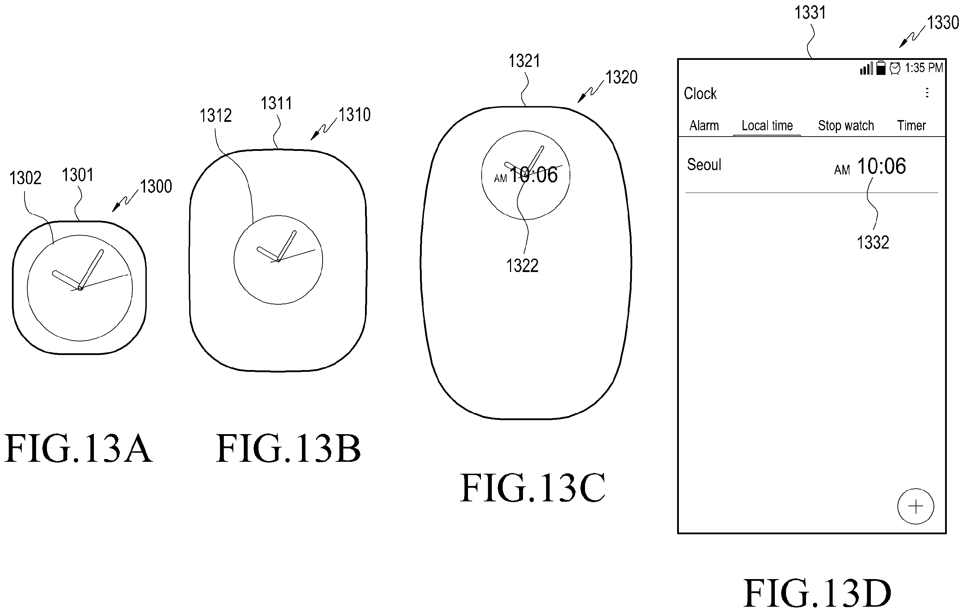

Referring to FIGs. 13A, 13B, 13C, and 13D, the electronic device 400 (e.g., the processor 401) may display a fifth icon 1300 corresponding to a clock application on the touch screen 402. When the fifth icon 1300 is touched, the electronic device 400 may sequentially display a first image 1310, a second image 1320, and a third image 1330 corresponding to the clock application on the touch screen 402.

According to an embodiment of the present disclosure, the fifth icon 1300 may include a first background object 1301 and a first configuration object 1302 as shown in FIG. 13A. The first image 1310 may include a second background object 1311 and a second configuration object 1312 as shown in FIG. 13B. The second image 1320 may include a third background object 1321 and a third configuration object 1322 as shown in FIG. 13C. The third image 1330 may include a fourth background object 1331 and a fourth configuration object 1332 as shown in FIG. 13D. For example, the third image 1330 may be an execution screen of the clock application.

According to an embodiment of the present disclosure, as shown in FIG. 13A, the electronic device 400 may display a first background object 1301 and a first configuration object 1302, which constitute the fifth icon 1300. For example, the electronic device 400 may display the first configuration object 1302 at the center of the first background object 1301.

According to an embodiment of the present disclosure, the electronic device 400, as shown in FIG. 13B, may display a second configuration object 1312 smaller than the first configuration object 1302 at a first position corresponding to the first configuration object 1302 on a second background object 1311 greater in size than the first background object 1301. For example, the electronic device 400 may display the second configuration object 1312 at the center (e.g., the first position) of the second background object 1311. For example, the second configuration object 1322 may be an image of an analog clock.

According to an embodiment of the present disclosure, the electronic device 400, as shown in FIG. 13C, may display a third configuration object 1322, which has been obtained by changing the shape of the second configuration object 1312, at a second position corresponding to the second configuration object 1312 on a third background object 1321 greater in size than the second background object 1311. For example, the electronic device 400 may display the third configuration object 1322 at a position (e.g., the second position) shifted a first distance from the center of the third background object 1321. The third configuration object 1322 may be an image of a digital clock. The distance between the center of the second background object 1311 and the second configuration object 1312 may be less than the distance between the center of the third background object 1321 and the third configuration object 1322. The electronic device 400 may display the second configuration object 1312 so as to fade out while displaying the third configuration object 1322 so as to fade in at the second position corresponding to the second configuration object 1312.

According to an embodiment of the present disclosure, the electronic device 400, as shown in FIG. 13D, may display a fourth configuration object 1332 at a third position corresponding to the third configuration object 1322 on the fourth background object 1331 greater in size than the third background object 1321. For example, the electronic device 400 may display the fourth configuration object 1332 at a position (e.g., the third position) shifted a second distance, which is greater than the first distance, from the center of the fourth background object 1331.

According to an embodiment of the present disclosure, the electronic device 400 may sequentially display the second background object 1311 greater in size than the first background object 1301; the third background object 1321 greater in size than the second background object 1311; and the fourth background object 1331 greater in size than the third background object 1321.

According to an embodiment of the present disclosure, the electronic device 400, as shown in FIG. 13B, may display the second configuration object 1312, which has been changed to have a first size less than the size of the first configuration object 1302, at a first position (e.g., the center of the second background object 1311) corresponding to the first configuration object 1302.

According to an embodiment of the present disclosure, the electronic device 400, as shown in FIG. 13C, may display the third configuration object 1322, which has been shifted to a second position (e.g., a position shifted a first distance from the center of the third background object 1321) corresponding to the second configuration object 1312 and has been obtained by changing the shape of the second configuration object 1312 into a first shape. For example, the electronic device 400 may display the digital clock shape corresponding to the third configuration object 1322 so as to fade in while displaying the analog clock shape corresponding to the second configuration object 1312 so as to fade out.

According to an embodiment of the present disclosure, the electronic device 400, as shown in FIG. 13D, may display the fourth configuration object 1332 that has been shifted to a third position (e.g., a position shifted a second distance, which is greater than the first distance, from the center of the fourth background object 1331) corresponding to the third configuration object 1322.

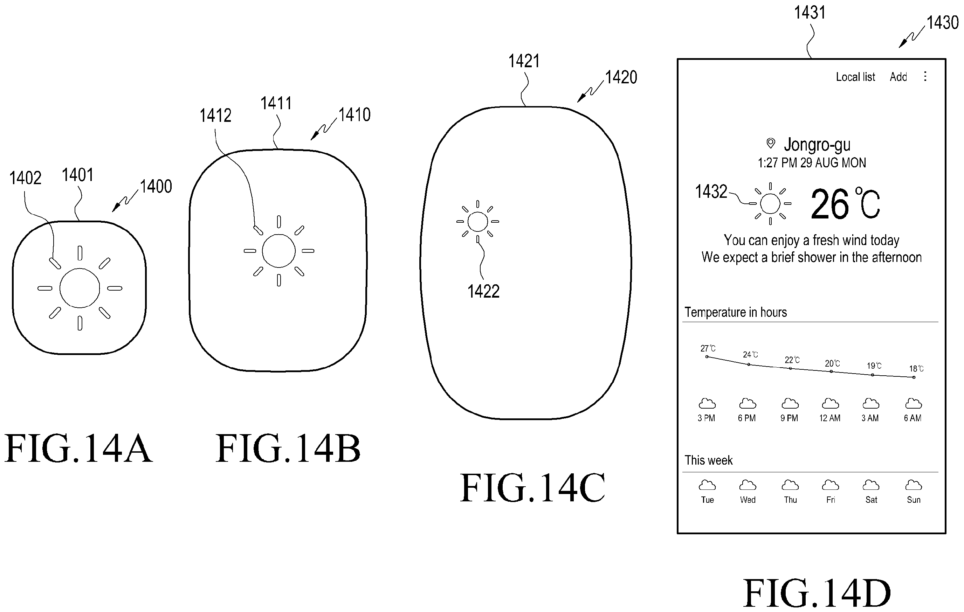

FIGs. 14A, 14B,14C, and 14D are diagrams of a user interface using icons, according to an embodiment of the present disclosure.

Referring to FIGs. 14A,14B, 14C, and 14D, the electronic device 400 (e.g., the processor 401) may display a sixth icon 1400 corresponding to a weather application on the touch screen 402. When the sixth icon 1400 is touched, the electronic device 400 may sequentially display a first image 1410, a second image 1420, and a third image 1430 corresponding to the weather application on the touch screen 402.

According to an embodiment of the present disclosure, the sixth icon 1400 may include a first background object 1401 and a first configuration object 1402 as shown in FIG. 14A. The first image 1410 may include a second background object 1411 and a second configuration object 1412 as shown in FIG. 14B. The second image 1420 may include a third background object 1421 and a third configuration object 1422 as shown in FIG. 14C. The third image 1430 may include a fourth background object 1431 and a fourth configuration object 1432 as shown in FIG. 14D. For example, the third image 1430 may be an execution screen of the weather application.

According to an embodiment of the present disclosure, as shown in FIG. 14A, the electronic device 400 may display a first background object 1401 and a first configuration object 1402, which constitute the sixth icon 1400. For example, the electronic device 400 may display the first configuration object 1402 at the center of the first background object 1401.

According to an embodiment of the present disclosure, the electronic device 400, as shown in FIG. 14B, may display a second configuration object 1412 smaller than the first configuration object 1402 at a first position corresponding to the first configuration object 1402 on a second background object 1411 greater in size than the first background object 1401. For example, the electronic device 400 may display the second configuration object 1412 at the center (e.g., the first position) of the second background object 1411.

According to an embodiment of the present disclosure, the electronic device 400, as shown in FIG. 14C, may display a third configuration object 1422 smaller than the second configuration object 1412 at a second position corresponding to the second configuration object 1412 on a third background object 1421 greater in size than the second background object 1411. For example, the electronic device 400 may display the third configuration object 1422 at a position (e.g., the second position) shifted a first distance from the center of the third background object 1421.

According to an embodiment of the present disclosure, the electronic device 400, as shown in FIG. 14D, may display a fourth configuration object 1432 at a third position corresponding to the third configuration object 1422 on the fourth background object 1431 greater in size than the third background object 1421. For example, the electronic device 400 may display the fourth configuration object 1432 at a position (e.g., the third position) shifted a second distance, which is greater than the first distance, from the center of the fourth configuration object 1432.

According to an embodiment of the present disclosure, the electronic device 400 may sequentially display the second background object 1411 greater in size than the first background object 1401; the third background object 1421 greater in size than the second background object 1411; and the fourth background object 1431 greater in size than the third background object 1421.

According to an embodiment of the present disclosure, the electronic device 400, as shown in FIG. 14B, may display the second configuration object 1412 at a first position (e.g., the center of the second background object 1411) corresponding to the first configuration object 1402.

According to an embodiment of the present disclosure, the electronic device 400, as shown in FIG. 14C, may display the third configuration object 1422, which has been shifted from the position of the second configuration object 1412 to a second position (e.g., a position shifted a first distance from the center of the third background object 1421) and has been changed to have a first size smaller than the size of the second configuration object 1412.

According to an embodiment of the present disclosure, the electronic device 400, as shown in FIG. 14D, may display the fourth configuration object 1432 that has been shifted from the position of the third configuration object 1422 to a third position (e.g., a position shifted a second distance, which is greater than the first distance, from the center of the fourth background object 1431).

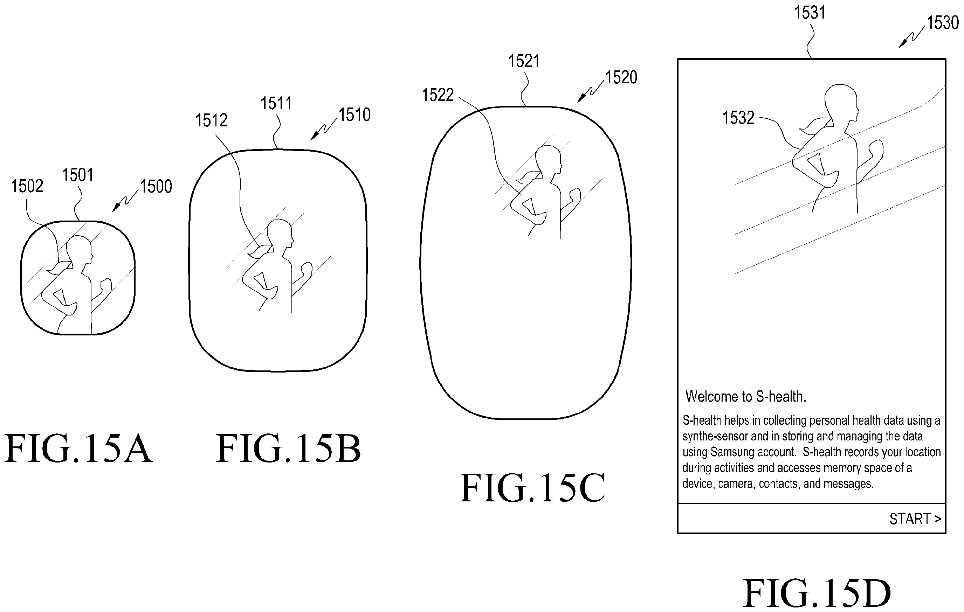

FIGs. 15A, 15B, 15C, and 15D are diagrams of a user interface using icons, according to an embodiment of the present disclosure.

Referring to FIGs. 15A. 15B, 15C, and 15D, the electronic device 400 (e.g., the processor 401) may display a seventh icon 1500 corresponding to a health application on the touch screen 402. When the seventh icon 1500 is touched, the electronic device 400 may sequentially display a first image 1510, a second image 1520, and a third image 1530 corresponding to the health application on the touch screen 402.

According to an embodiment of the present disclosure, the seventh icon 1500 may include a first background object 1501 and a first configuration object 1502 as shown in FIG. 15A. The first image 1510 may include a second background object 1511 and a second configuration object 1512 as shown in FIG. 15B. The second image 1520 may include a third background object 1521 and a third configuration object 1522 as shown in FIG. 15C. The third image 1530 may include a fourth background object 1531 and a fourth configuration object 1532 as shown in FIG. 15D. For example, the third image 1530 may be an execution screen of the health application.

According to an embodiment of the present disclosure, as shown in FIG. 15A, the electronic device 400 may display a first background object 1501 and a first configuration object 1502, which constitute the seventh icon 1500. For example, the first background object 1501 and the first configuration object 1502 may be displayed so as to overlap each other in the form of a layer with the same size.

According to an embodiment of the present disclosure, the electronic device 400, as shown in FIG. 15B, may display a second configuration object 1512 at a first position corresponding to the first configuration object 1502 on a second background object 1511 greater in size than the first background object 1501. For example, the electronic device 400 may display the second configuration object 1512 at the center (e.g., the first position) of the second background object 1511.

According to an embodiment of the present disclosure, the electronic device 400, as shown in FIG. 15C, may display a third configuration object 1522 at a second position corresponding to the second configuration object 1512 on a third background object 1521 greater in size than the second background object 1511. For example, the electronic device 400 may display the third configuration object 1522 at a position (e.g., the second position) shifted a first distance from the center of the third background object 1521. The distance between the center of the second background object 1511 and the second configuration object 1512 may be less than the distance between the center of the third background object 1521 and the third configuration object 1522.

According to an embodiment of the present disclosure, the electronic device 400, as shown in FIG. 15D, may display a fourth configuration object 1532 greater in size than the third configuration object 1521 at a third position corresponding to the third configuration object 1522 on the fourth background object 1531 greater in size than the third background object 1521. For example, the electronic device 400 may display the fourth configuration object 1532 at a position (e.g., the third position) shifted a second distance, which is greater than the first distance, from the center of the fourth background object 1531. The fourth configuration object 1532 may be at least some of a background image corresponding to an execution screen of the application.

According to an embodiment of the present disclosure, the electronic device 400 may sequentially display the second background object 1511 greater in size than the first background object 1501; the third background object 1521 greater in size than the second background object 1511; and the fourth background object 1531 greater in size than the third background object 1521.

According to an embodiment of the present disclosure, the electronic device 400, as shown in FIG. 15B, may display the second configuration object 1512 at a first position (e.g., the center of the second background object 1511) corresponding to the position of the first configuration object 1502.

According to an embodiment of the present disclosure, the electronic device 400, as shown in FIG. 15C, may display the third configuration object 1522 shifted from the position of the second configuration object 1512 to a second position (e.g., a position shifted a first distance from the center of the third background object 1521).

According to an embodiment of the present disclosure, the electronic device 400, as shown in FIG. 15D, may display the fourth configuration object 1532, which has been changed to have a first size greater than the size of the third configuration object 1522 and has been shifted from the position of the third configuration object 1522 to a third position (e.g., a position shifted a second distance, which is greater than the first distance, from the center of the fourth background object 1531).

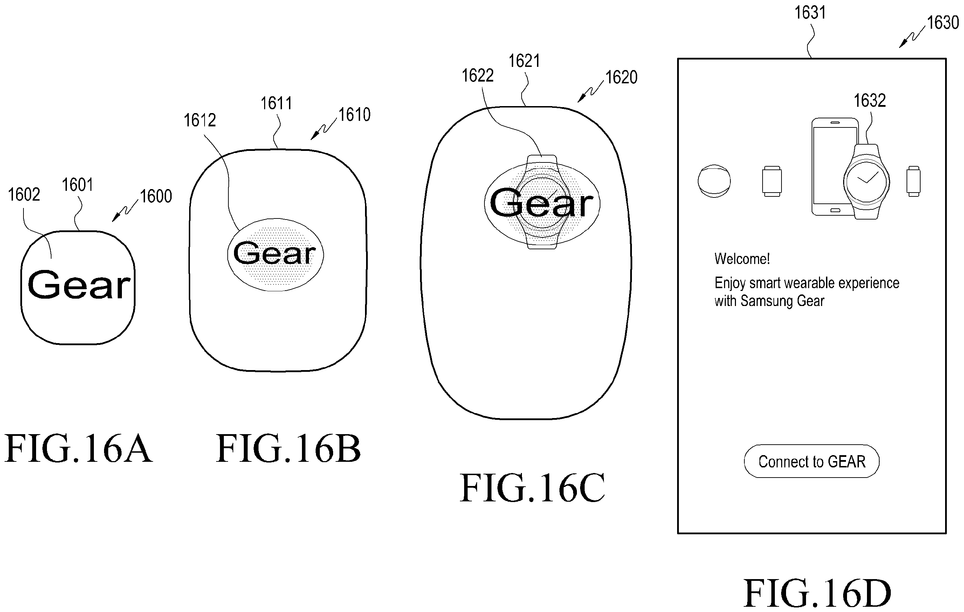

FIGs. 16A, 16B, 16C, and 16D are diagrams of a user interface using icons, according to an embodiment of the present disclosure.

Referring to FIGs. 16A, 16B, 16C, and 16D, the electronic device 400 (e.g., the processor 401) may display an eighth icon 1600 corresponding to a wearable device-related application (e.g., a gear application) on the touch screen 402. When the eighth icon 1600 is touched, the electronic device 400 may sequentially display a first image 1610, a second image 1620, and a third image 1630 corresponding to a gear application on the touch screen 402.

According to an embodiment of the present disclosure, the eighth icon 1600 may include a first background object 1601 and a first configuration object 1602 as shown in FIG. 16A. The first image 1610 may include a second background object 1611 and a second configuration object 1612 as shown in FIG. 16B. The second image 1620 may include a third background object 1621 and a third configuration object 1622 as shown in FIG. 16C. The third image 1630 may include a fourth background object 1631 and a fourth configuration object 1632 as shown in FIG. 16D. For example, the third image 1630 may be an execution screen of the gear application.

According to an embodiment an embodiment of the present disclosure, as shown in FIG. 16A, the electronic device 400 may display a first background object 1601 and a first configuration object 1602, which constitute the eighth icon 1600. For example, the first background object 1601 and the first configuration object 1602 may be displayed so as to overlap each other in the form of a layer with the same size. The electronic device 400, as shown in FIG. 16B, may display a second configuration object 1612 smaller than the first configuration object 1602 at a first position corresponding to the first configuration object 1602 on a second background object 1611 greater in size than the first background object 1601. For example, the electronic device 400 may display the second configuration object 1612 at the center (e.g., the first position) of the second background object 1611.

According to an embodiment of the present disclosure, the electronic device 400, as shown in FIG. 16C, may display a third configuration object 1622 obtained by changing the shape of the second configuration object 1612 at a second position corresponding to the second configuration object 1612 on a third background object 1621 greater than the second background object 1611. For example, the electronic device 400 may display the third configuration object 1622 at a position (e.g., the second position) shifted a first distance from the center of the third background object 1621. The second configuration object 1612 may include text, and the third configuration object 1622 may include an image. The distance between the center of the second background object 1611 and the second configuration object 1612 may be less than the distance between the center of the third background object 1621 and the third configuration object 1622. The electronic device 400 may display the second configuration object 1612 so as to fade out while displaying the third configuration object 1622 so as to fade in at the second position.

According to an embodiment of the present disclosure, the electronic device 400, as shown in FIG. 16D, may display a fourth configuration object 1632 smaller than the third configuration object 1622 at a third position corresponding to the third configuration object 1622 on the fourth background object 1631 greater in size than the third background object 1621. For example, the electronic device 400 may display the fourth configuration object 1632 at a position (e.g., the third position) shifted a second distance, which is different from the first distance, from the center of the fourth background object. The fourth configuration object 1632 may be at least some of a background image (e.g., a wearable-device image) corresponding to an execution screen of the application.

According to an embodiment of the present disclosure, the electronic device 400 may sequentially display the second background object 1611 greater in size than the first background object 1601; the third background object 1621 greater in size than the second background object 1611; and the fourth background object 1631 greater in size than the third background object 1621.

According to an embodiment of the present disclosure, the electronic device 400, as shown in FIG. 16B, may display the second configuration object 1612, which has been changed to have a first size smaller than the size of the first configuration object 1602, at a first position (e.g., the center of the second background object 1611) corresponding to the position of the first configuration object 1602.

According to an embodiment of the present disclosure, the electronic device 400, as shown in FIG. 16C, may display the third configuration object 1622, which has been shifted from the position of the second configuration object 1612 to a second position (e.g., a position shifted a first distance from the center of the third background object 1621) and has been obtained by changing the shape of the second configuration object 1612 into a first shape. For example, the electronic device 400 may display text corresponding to the second configuration object 1612 so as to fade out (or gradually become transparent) while displaying a wrist-watch corresponding to the third configuration object 1622 so as to fade in.

According to an embodiment of the present disclosure, the electronic device 400, as shown in FIG. 16D, may display the fourth configuration object 1632, which has been changed to have a second size smaller than the size of the third configuration object 1622 and has been shifted from the position of the third configuration object 1622 to a third position (e.g., a position shifted a second distance, which is different from the first distance, from the center of the fourth background object 1631).

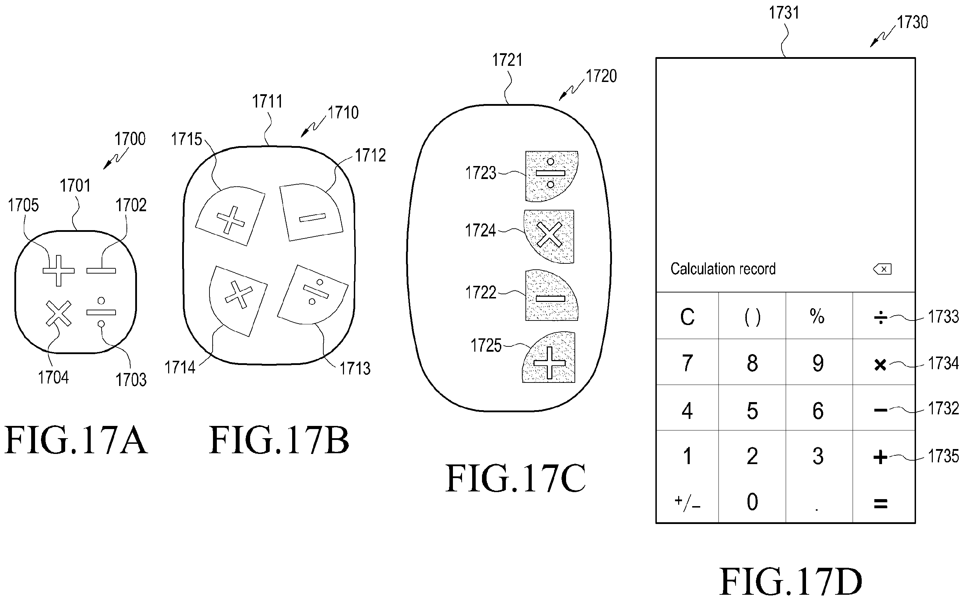

FIGs. 17A, 17B, 17C, and 17D are diagrams of a user interface using icons, according to an embodiment of the present disclosure.

Referring to FIGs. 17A, 17B, 17C, and 17D, the electronic device 400 (e.g., the processor 401) may display a ninth icon 1700 corresponding to a calculator application on the touch screen 402. When the ninth icon 1700 is touched, the electronic device 400 may sequentially display a first image 1710, a second image 1720, and a third image 1730 corresponding to a calculator application on the touch screen 402.

According to an embodiment of the present disclosure, the ninth icon 1700 may include a first background object 1701 and a first configuration object 1702, 1703, 1704, or 1705 as shown in FIG. 17A. For example, the first configuration object 1702, 1703, 1704, or 1705 may include a first sub-configuration object, a second sub-configuration object, a third sub-configuration object, and a fourth sub-configuration object, respectively.

The first image 1710 may include a second background object 1711 and a second configuration object 1712, 1713, 1714, or 1715 as shown in FIG. 17B. For example, the second configuration object 1712, 1713, 1714, or 1715 may include a first sub-configuration object, a second sub-configuration object, a third sub-configuration object, and a fourth sub-configuration object, respectively.

The second image 1720 may include a third background object 1721 and a third configuration object 1722, 1723, 1724, or 1725 as shown in FIG. 17C. For example, the third configuration object 1722, 1723, 1724, or 1725 may include a first sub-configuration object, a second sub-configuration object, a third sub-configuration object, and a fourth sub-configuration object, respectively.

The third image 1730 may include a fourth background object 1731 and a fourth configuration object 1732, 1733, 1734, or 1735 as shown in FIG. 17D. For example, the fourth configuration object may include a first sub-configuration object 1732, a second sub-configuration object 1733, a third sub-configuration object 1734, and a fourth sub-configuration object 1735. The third image 1730 may be an execution screen of the calculator application.

According to an embodiment of the present disclosure, as shown in FIG. 17A, the electronic device 400 may display a first background object 1701 and a first configuration object 1702, which constitute the ninth icon 1700. For example, the first background object 1701 and the first configuration object 1702 may be displayed so as to overlap each other in the form of a layer with the same size.

According to an embodiment of the present disclosure, the electronic device 400, as shown in FIG. 17B, may display a first sub-configuration object 1712, a second sub-configuration object 1713, a third sub-configuration object 1714, and a fourth sub-configuration object 1715 of the second configuration object including the first sub-configuration object 1702, the second sub-configuration object 1703, the third sub-configuration object 1704, and the fourth sub-configuration object 1705 of the first configuration object, respectively, on the second background object 1711 greater in size than the first background object 1701.

For example, the electronic device 400 may display the first sub-configuration object 1712 of the second configuration object including the first sub-configuration object 1702 of the first configuration object at a first position shifted a first distance from the center of the second background object 1711. The electronic device 400 may display the second sub-configuration object 1713 of the second configuration object including the second sub-configuration object 1703 of the first configuration object at a second position shifted a second distance from the center of the second background object 1711. The electronic device 400 may display the third sub-configuration object 1714 of the second configuration object including the third sub-configuration object 1704 of the first configuration object at a third position shifted a third distance from the center of the second background object 1711. The electronic device 400 may display the fourth sub-configuration object 1715 of the second configuration object including the fourth sub-configuration object 1705 of the first configuration object at a fourth position shifted a fourth distance from the center of the second background object. The first, second, third, and fourth positions may not overlap each other, and may be shifted in different directions from the center of the second background object. The first sub-configuration object 1702 of the first configuration object may include a subtraction symbol image, and the second sub-configuration object 1703 may include a division symbol image. The third sub-configuration object 1704 may include a multiplication symbol image, and the fourth sub-configuration object 1705 may include an addition symbol image.

According to an embodiment of the present disclosure, the first sub-configuration object 1712, the second sub-configuration object 1713, the third sub-configuration object 1714, and the fourth sub-configuration object 1715 of the second configuration object may have shapes obtained by dividing the first background object 1701 into four pieces, respectively.

According to an embodiment of the present disclosure, the electronic device 400, as shown in FIG. 17C, may display, on a third background object 1721 greater in size than the second background object 1711 a first sub-configuration object 1722 of the third configuration object, which is obtained by changing the size and shape of the first sub-configuration object 1712 of the second configuration object, at a fifth position corresponding to the first sub-configuration object 1712 of the second configuration object; and a second sub-configuration object 1723 of the third configuration object, which is obtained by changing the size and shape of the second sub-configuration object 1713 of the second configuration object, at a sixth position corresponding to the second sub-configuration object 1713 of the second configuration object. The electronic device 400 may display, on a third background object 1721 a third sub-configuration object 1724 of the third configuration object, which is obtained by changing the size and shape of the third sub-configuration object 1714 of the second configuration object, at a seventh position corresponding to the third sub-configuration object 1714 of the second configuration object; and a fourth sub-configuration object 1725 of the third configuration object, which is obtained by changing the size and shape of the fourth sub-configuration object 1715 of the second configuration object, at an eighth position corresponding to the fourth sub-configuration object 1715 of the second configuration object. For example, the first sub-configuration object 1722, the second sub-configuration object 1723, the third sub-configuration object 1724, and the fourth sub-configuration object 1725 of the third configuration object may be displayed to be arranged in a column.

According to an embodiment of the present disclosure, the electronic device 400, as shown in FIG. 17D, may display, on a fourth background object 1731 greater in size than the third background object 1721, a first sub-configuration object 1732 of the fourth configuration object, which is obtained by changing the shape of the first sub-configuration object 1722 of the third configuration object, at a ninth position corresponding to the first sub-configuration object 1722 of the third configuration object. The electronic device 400 may display, on the fourth background object 1721, a second sub-configuration object 1733 of the fourth configuration object, which is obtained by changing the shape of the second sub-configuration object 1723 of the third configuration object, at a tenth position corresponding to the second sub-configuration object 1723 of the third configuration object. The electronic device 400 may display, on the fourth background object 1721, a third sub-configuration object 1734 of the fourth configuration object, which is obtained by changing the shape of the third sub-configuration object 1724 of the third configuration object, at an eleventh position corresponding to the third sub-configuration object 1724 of the third configuration object. The electronic device 400 may display, on the fourth background object 1721, a fourth sub-configuration object 1735 of the fourth configuration object, which is obtained by changing the shape of the fourth sub-configuration object 1725 of the third configuration object, at an twelfth position corresponding to the fourth sub-configuration object 1725 of the third configuration object.

According to an embodiment of the present disclosure, the electronic device 400 may sequentially display the second background object 1711 greater in size than the first background object 1701; the third background object 1721 greater in size than the second background object 1711; and the fourth background object 1731 greater in size than the third background object 1721.

According to an embodiment of the present disclosure, the electronic device 400, as shown in FIG. 17B, may display a first sub-configuration object 1712 of the second configuration object including the first sub-configuration object 1702 of the first configuration object at a first position. For example, the first position may be a position shifted a first distance in a first direction from the center of the second background object 1711.

According to an embodiment of the present disclosure, the electronic device 400, as shown in FIG. 17B, may display a second sub-configuration object 1713 of the second configuration object including the second sub-configuration object 1703 of the first configuration object at a second position. For example, the second position may be a position shifted a second distance, which is different from the first distance, in a second direction, which is different from the first direction, from the center of the second background object 1711.

According to an embodiment of the present disclosure, the electronic device 400, as shown in FIG. 17B, may display a third sub-configuration object 1714 of the second configuration object including the third sub-configuration object 1704 of the first configuration object at a third position. For example, the third position may be a position shifted a third distance, which is different from the second distance, in a third direction, which is different from the second direction, from the center of the second background object 1711.

According to an embodiment of the present disclosure, the electronic device 400, as shown in FIG. 17B, may display a fourth sub-configuration object 1715 of the second configuration object including the fourth sub-configuration object 1705 of the first configuration object at a fourth position. For example, the fourth position may be a position shifted a fourth distance, which is different from the third distance, in a fourth direction, which is different from the third direction, from the center of the second background object 1711.

According to an embodiment of the present disclosure, the electronic device 400, as shown in FIG. 17C, may display a first sub-configuration object 1722 of the third configuration object, which has been shifted from the position of the first sub-configuration object 1712 of the second configuration object to a fifth position and has been obtained by changing the shape of the first sub-configuration object 1712 of the second configuration object into a first shape.

According to an embodiment of the present disclosure, the electronic device 400, as shown in FIG. 17C, may display a second sub-configuration object 1723 of the third configuration object, which has been shifted from the position of the second sub-configuration object 1713 of the second configuration object to a sixth position and has been obtained by changing the shape of the second sub-configuration object 1713 of the second configuration object into a second shape.

According to an embodiment of the present disclosure, the electronic device 400, as shown in FIG. 17C, may display a third sub-configuration object 1724 of the third configuration object, which has been shifted from the position of the third sub-configuration object 1714 of the second configuration object to a seventh position and has been obtained by changing the shape of the third sub-configuration object 1714 of the second configuration object into a third shape.

According to an embodiment of the present disclosure, the electronic device 400, as shown in FIG. 17C, may display a fourth sub-configuration object 1725 of the third configuration object, which has been shifted from the position of the fourth sub-configuration object 1715 of the second configuration object to an eighth position and has been obtained by changing the shape of the fourth sub-configuration object 1715 of the second configuration object into a fourth shape.

According to various embodiments, the fifth, sixth, seventh, and eighth positions may be arranged in a column.

According to an embodiment of the present disclosure, the first, second, third, and fourth shapes may have different colors from that of the first sub-configuration object 1712, the second sub-configuration object 1713, the third sub-configuration object 1714, and the fourth sub-configuration object 1715 of the second configuration object.

According to an embodiment of the present disclosure, the electronic device 400, as shown in FIG. 17D, may display a first sub-configuration object 1732 of the fourth configuration object, which has been shifted from the position of the first sub-configuration object 1722 of the third configuration object to a ninth position and has been obtained by changing the shape of the first sub-configuration object 1722 of the third configuration object into a fifth shape.

According to an embodiment of the present disclosure, the electronic device 400, as shown in FIG. 17D, may display a second sub-configuration object 1733 of the fourth configuration object, which has been shifted from the position of the second sub-configuration object 1723 of the third configuration object to a tenth position and has been obtained by changing the shape of the second sub-configuration object 1723 of the third configuration object into a sixth shape.

According to an embodiment of the present disclosure, the electronic device 400, as shown in FIG. 17D, may display a third sub-configuration object 1734 of the fourth configuration object, which has been shifted from the position of the third sub-configuration object 1724 of the third configuration object to an eleventh position and has been obtained by changing the shape of the third sub-configuration object 1724 of the third configuration object into a seventh shape.

According to an embodiment of the present disclosure, the electronic device 400, as shown in FIG. 17D, may display a fourth sub-configuration object 1735 of the fourth configuration object, which has been shifted from the position of the fourth sub-configuration object 1725 of the third configuration object to a twelfth position and has been obtained by changing the shape of the fourth sub-configuration object 1725 of the third configuration object into an eighth shape.

According to an embodiment of the present disclosure, the ninth, tenth, eleventh, and twelfth positions may be arranged in a column.

According to an embodiment of the present disclosure, the fifth shape may be a first button corresponding to a subtraction function, and the sixth shape may be a second button corresponding to a division function. The seventh shape may be a third button corresponding to a multiplication function, and the eighth shape may be a fourth button corresponding to an addition function.

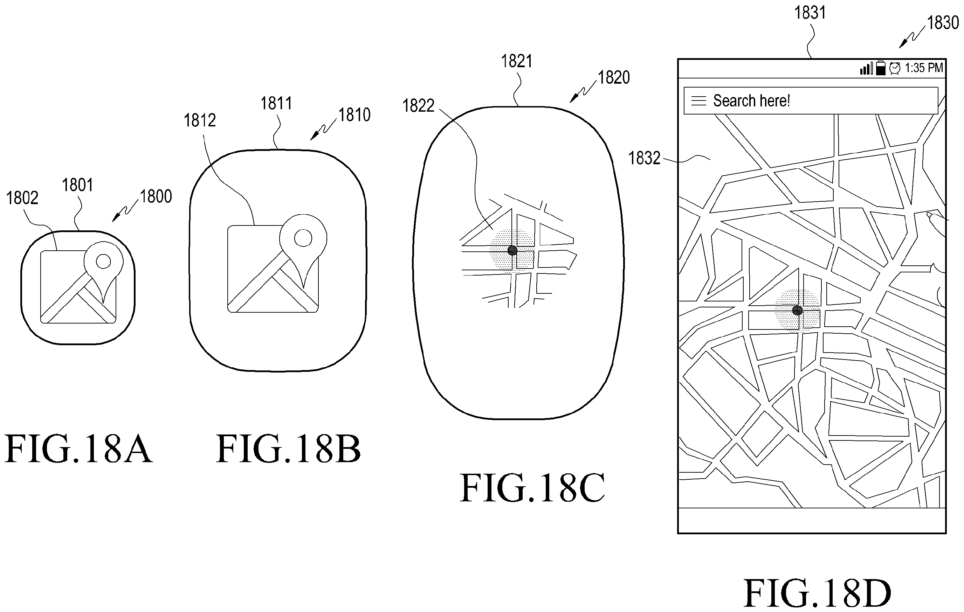

FIGs. 18A, 18B, 18C, and 18D are diagrams of a user interface using icons, according to an embodiment of the present disclosure.

Referring to FIGs. 18A, 18B, 18C, and 18D, the electronic device 400 (e.g., the processor 401) may display a tenth icon 1800 corresponding to a map application on the touch screen 402. When the tenth icon 1800 is touched, the electronic device 400 may sequentially display a first image 1810, a second image 1820, and a third image 1830 corresponding to a map application on the touch screen 402.

According to an embodiment of the present disclosure, the tenth icon 1800 may include a first background object 1801 and a first configuration object 1802 as shown in FIG. 18A. The first image 1810 may include a second background object 1811 and a second configuration object 1812 as shown in FIG. 18B. The second image 1820 may include a third background object 1821 and a third configuration object 1822 as shown in FIG. 18C. The third image 1830 may include a fourth background object 1831 and a fourth configuration object 1832 as shown in FIG. 18D. For example, the third image 1830 may be an execution screen of the map application.

According to an embodiment of the present disclosure, as shown in FIG. 18A, the electronic device 400 may display a first background object 1801 and a first configuration object 1802, which constitute the tenth icon 1800.

According to an embodiment of the present disclosure, the electronic device 400, as shown in FIG. 18B, may display a second configuration object 1812 at a first position corresponding to the first configuration object 1802 on a second background object 1811 greater in size than the first background object 1801. For example, the electronic device 400 may display the second configuration object 1812 at the center (e.g., the first position) of the second background object 1811.

According to an embodiment of the present disclosure, the electronic device 400, as shown in FIG. 18C, may display a third configuration object 1822 obtained by changing the shape of the second configuration object 1812 at a second position corresponding to the second configuration object 1812 on a third background object 1821 greater in size than the second background object 1811. For example, the electronic device 400 may display the third configuration object at the center of the third background object 1831. The third configuration object 1822 may be at least some of a map image corresponding to the first position.

According to an embodiment of the present disclosure, the electronic device 400, as shown in FIG. 18D, may display a fourth configuration object 1832 greater in size than the third configuration object 1822 at a third position corresponding to the third configuration object 1822 on the fourth background object 1831 greater in size than the third background object 1821. For example, the fourth configuration object 1832 may be a map image corresponding to a certain area including the first position.

According to an embodiment of the present disclosure, the electronic device 400 may sequentially display the second background object 1811 greater in size than the first background object 1801; the third background object 1821 greater in size than the second background object 1811; and the fourth background object 1831 greater in size than the third background object 1821.

According to an embodiment of the present disclosure, the electronic device 400, as shown in FIG. 18B, may display a second configuration object 1812, which has been changed to have a first size greater than the size of the first configuration object 1802 and has been shifted from the position of the first configuration object 1802 to a first position (e.g., the center of the second background object 1811).

According to an embodiment of the present disclosure, the electronic device 400, as shown in FIG. 18C, may display a third configuration object 1822, which has been obtained by changing the shape of the second configuration object 1812 into a first shape and has been shifted from the position of the second configuration object 1812 to a second position (e.g., the center of the third background object 1821). For example, the third configuration object 1822 may be at least some of a map image corresponding to a certain position.

According to an embodiment of the present disclosure, the electronic device 400, as shown in FIG. 18D, may display a fourth configuration object 1832, which has been changed to have a second size greater than the size of the third configuration object 1822 and has been shifted from the position of the third configuration object 1822 to a third position (e.g., the center of the fourth background object 1831).

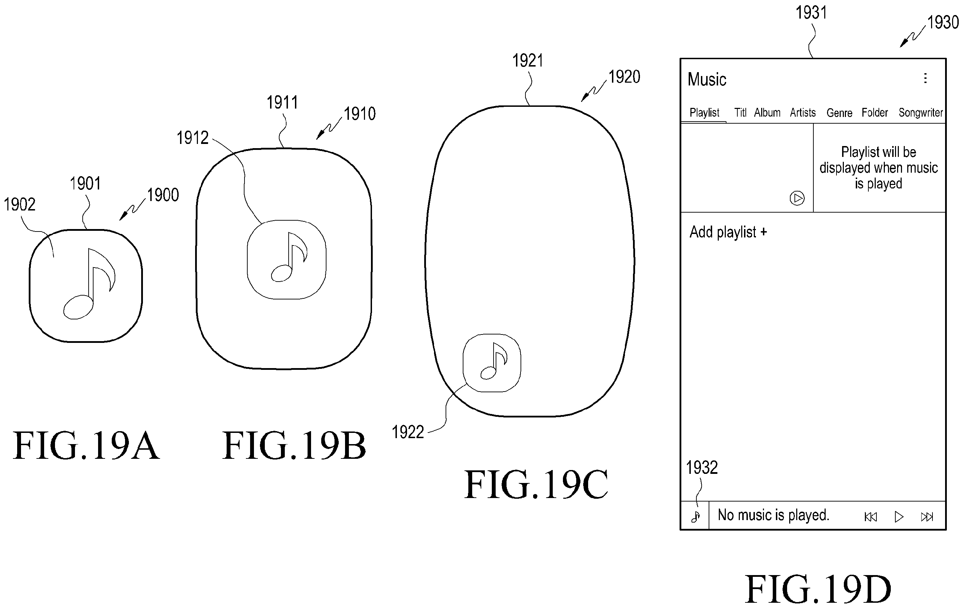

FIGs. 19A, 19B, 19C, and 19D are diagrams of a user interface using icons, according to an embodiment of the present disclosure.

Referring to FIGs. 19A, 19B, 19C, and 19D, the electronic device 400 (e.g., the processor 401) may display an eleventh icon 1900 corresponding to a music-player application on the touch screen 402. When the eleventh icon 1900 is touched, the electronic device 400 may sequentially display a first image 1910, a second image 1920, and a third image 1930 corresponding to a music-player application on the touch screen 402.

According to an embodiment of the present disclosure, the eleventh icon 1900 may include a first background object 1901 and a first configuration object 1902 as shown in FIG. 19A. The first image 1910 may include a second background object 1911 and a second configuration object 1912 as shown in FIG. 19B. The second image 1920 may include a third background object 1921 and a third configuration object 1922 as shown in FIG. 19C. The third image 1930 may include a fourth background object 1931 and a fourth configuration object 1932 as shown in FIG. 19D. For example, the third image 1930 may be an execution screen of the music-player application.

According to an embodiment of the present disclosure, as shown in FIG. 19A, the electronic device 400 may display a first background object 1901 and a first configuration object 1902, which constitute the eleventh icon 1900. For example, the first background object 1901 and the first configuration object 1902 may be displayed so as to overlap each other with the same size.

According to an embodiment of the present disclosure, the electronic device 400, as shown in FIG. 19B, may display a second configuration object 1912 smaller than the first configuration object 1902 at a first position corresponding to the first configuration object 1902 on a second background object 1911 greater in size than the first background object 1901. For example, the electronic device 400 may display the second configuration object 1912 at the center (e.g., the first position) of the second background object 1911.

According to an embodiment of the present disclosure, the electronic device 400, as shown in FIG. 19C, may display a third configuration object 1922 smaller than the second configuration object 1912 at a second position corresponding to the second configuration object 1912 on a third background object 1921 greater in size than the second background object 1911. For example, the electronic device 400 may display the third configuration object 1922 at the center (e.g., the second position) of the third background object 1921. The distance between the center of the second background object 1911 and the second configuration object 1912 may be less than the distance between the center of the third background object 1921 and the third configuration object 1922.

According to an embodiment of the present disclosure, the electronic device 400, as shown in FIG. 19D, may display a fourth configuration object 1932 smaller than the third configuration object 1922 at a third position corresponding to the third configuration object 1922 on the fourth background object 1931 greater in size than the third background object 1921. For example, the electronic device 400 may display a certain image indicating music that is currently played, which corresponds to the fourth configuration object 1932, in a lower left side (e.g., the third position) in the execution screen of the music-player application corresponding to the fourth background object 1931.

According to an embodiment of the present disclosure, the electronic device 400 may sequentially display the second background object 1911 greater in size than the first background object 1901; the third background object 1921 greater in size than the second background object 1911; and the fourth background object 1931 greater in size than the third background object 1921.

According to an embodiment of the present disclosure, the electronic device 400, as shown in FIG. 19B, may display a second configuration object 1912, which has been changed to have a first size smaller than the size of the first configuration object 1902 and has been shifted from the position of the first configuration object 1902 to a first position (e.g., the center of the second background object 1911).

According to an embodiment of the present disclosure, the electronic device 400, as shown in FIG. 19C, may display a third configuration object 1922, which has been changed to have a second size smaller than the size of the second configuration object 1912 and has been shifted from the position of the second configuration object 1912 to a second position (e.g., the lower left side of the third background object 1921).

According to an embodiment of the present disclosure, the electronic device 400, as shown in FIG. 19D, may display a fourth configuration object 1932, which has been changed to have a third size smaller than the size of the third configuration object 1922 and has been shifted from the position of the third configuration object 1922 to a third position (e.g., the lower left side of the fourth background object 1931).

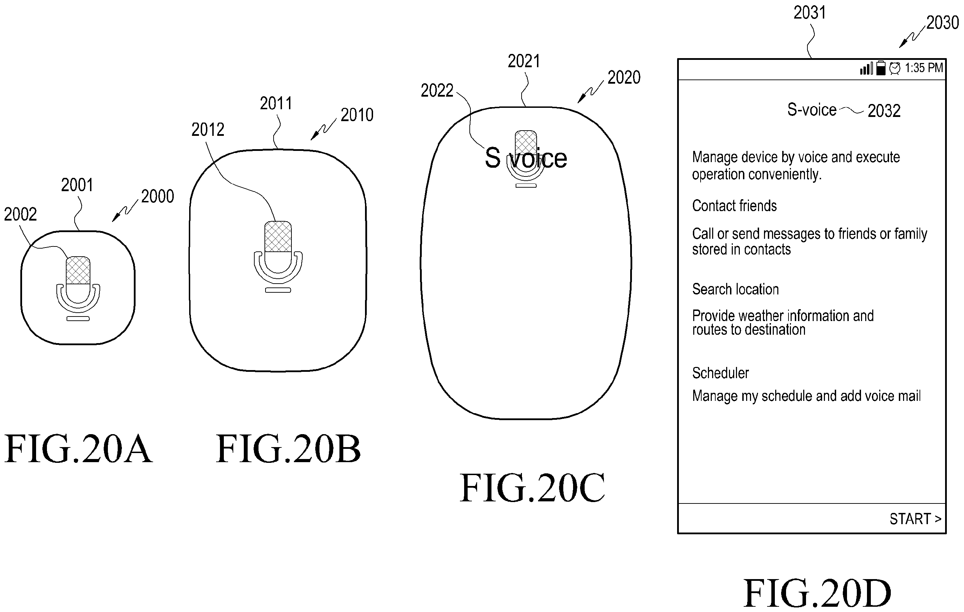

FIGs. 20A, 20B, 20C, and 20D are diagrams of a user interface using icons, according to an embodiment of the present disclosure.

Referring to FIGs. 20A, 20B, 20C, and 20D, the electronic device 400 (e.g., the processor 401) may display a twelfth icon 2000 corresponding to a voice recognition application on the touch screen 402. When the twelfth icon 2000 is touched, the electronic device 400 may sequentially display a first image 2010, a second image 2020, and a third image 2030 corresponding to a voice recognition application on the touch screen 402.

According to an embodiment of the present disclosure, the twelfth icon 2000 may include a first background object 2001 and a first configuration object 2002 as shown in FIG. 20A. The first image 2010 may include a second background object 2011 and a second configuration object 2012 as shown in FIG. 20B. The second image 2020 may include a third background object 2021 and a third configuration object 2022 as shown in FIG. 20C. The third image 2030 may include a fourth background object 2031 and a fourth configuration object 2032 as shown in FIG. 20D. For example, the third image 2030 may be an execution screen of the voice recognition application.

According to an embodiment of the present disclosure, as shown in FIG. 20A, the electronic device 400 may display a first background object 2001 and a first configuration object 2002, which constitute the twelfth icon 2000.

According to an embodiment of the present disclosure, the electronic device 400, as shown in FIG. 20B, may display a second configuration object 2012 at a first position corresponding to the first configuration object 2002 on the second background object 2011 greater in size than the first background object 2001. For example, the electronic device 400 may display the second configuration object 2012 at the center (e.g., the first position) of the second background object 2011.

According to an embodiment of the present disclosure, the electronic device 400, as shown in FIG. 20C, may display a third configuration object 2022, which is obtained by changing the shape of the second configuration object 2012, at a second position corresponding to the second configuration object 2012, on a third background object 2021 greater in size than the second background object 2011. For example, the electronic device 400 may display the third configuration object 2022 obtained by changing the second configuration object 2012 of a microphone image into text at an upper center (e.g., the second position) of the third background object 2021. The distance between the center of the second background object 2011 and the second configuration object 2012 may be less than the distance between the center of the third background object 2021 and the third configuration object 2022. The electronic device 400 may display the second configuration object 2012 so as to fade out while displaying the third configuration object 2022 so as to fade in at the second position corresponding to the second configuration object 2012.

According to an embodiment of the present disclosure, the electronic device 400, as shown in FIG. 20D, may display a fourth configuration object 2032 smaller than the third configuration object 2022 at a third position corresponding to the third configuration object 2022 on a fourth background object 2031 greater in size than the third background object 2021. For example, the electronic device 400 may display a fourth configuration object 2032 in an upper center (e.g., the third position) of the fourth background object 2031, among the text strings arranged in the fourth background object 2031.

According to an embodiment of the present disclosure, the electronic device 400 may sequentially display the second background object 2011 greater in size than the first background object 2001; the third background object 2021 greater in size than the second background object 2011; and the fourth background object 2031 greater in size than the third background object 2021.

According to an embodiment of the present disclosure, the electronic device 400, as shown in FIG. 20B, may display the second configuration object 2012 shifted from the position of the first configuration object 2002 to a first position (e.g., the center of the second background object 2011).

According to an embodiment of the present disclosure, the electronic device 400, as shown in FIG. 20C, may display the third configuration object 2022 that has been obtained by changing the shape (e.g., an image) of the second configuration object 2012 into a first shape (e.g., text) and has been shifted from the position of the second configuration object 2012 to a second position (e.g., an upper center of the third background object 2021).

According to an embodiment of the present disclosure, the electronic device 400, as shown in FIG. 20D, may display the fourth configuration object 2032, which has been changed to have a first size smaller than the size of the third configuration object 2022 and has been shifted from the position of the third configuration object 2022 to a third position (e.g., an upper center of the fourth background object 2031), among the text strings arranged in the fourth background object 2031.

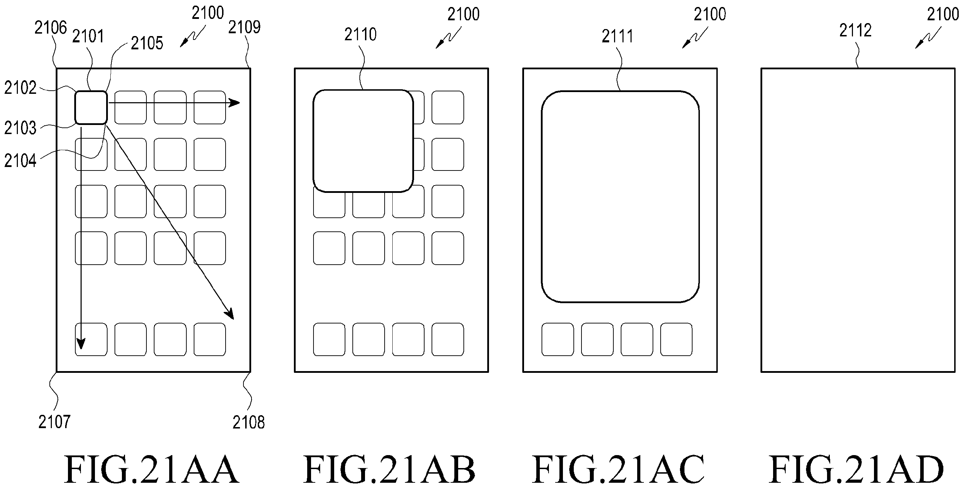

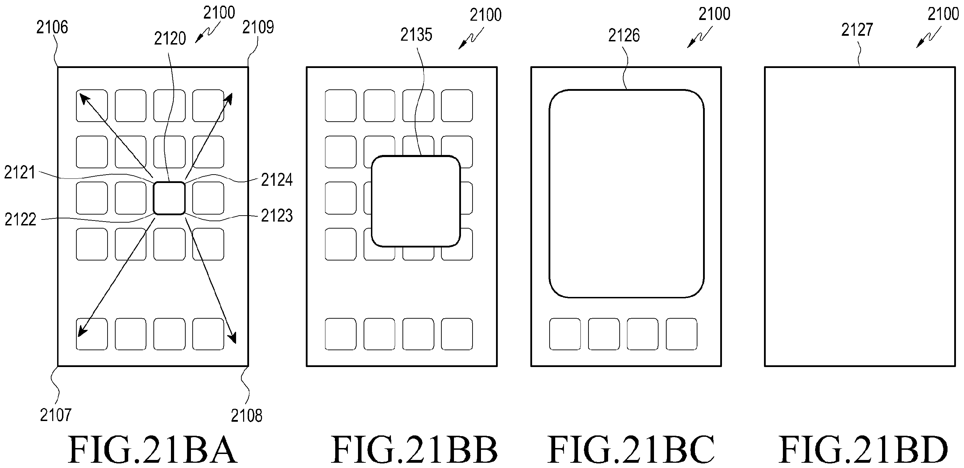

FIGs. 21AA, 21AB, 21AC, 21AD, 21BA, 21BB, 21BC, and 21BD are diagrams of a user interface using icons, according to an embodiment of the present disclosure.

Referring to FIGs. 21AA, 21AB, 21AC, and 21AD, when a first icon 2101 is touched, the electronic device 400 (e.g., the processor 401) may identify the position (e.g., coordinate values) of the first icon 2101 touched. For example, as shown in FIG. 21AA, a standby screen 2100 including one or more icons has an upper left corner 2106, a lower left corner 2107, a lower right corner 2108, and an upper right corner 2109. In the case where a first icon 2101 is located close to the upper left corner 2106, the electronic device 400 may display a first image 2110 and a second image 2111 such that a second point 2103 corresponding to the lower left corner 2107 is extended in the direction to the reference numeral 2107; a third point 2104 corresponding to the lower right corner 2108 is extended in the direction to the reference numeral 2108; and a fourth point 2105 corresponding to the upper right corner 2109 is extended in the direction to the reference numeral 2109 while fixing a first point 2102 corresponding to the upper left corner 2106 of the first icon 2101, thereby displaying a third image 2112 that is extended through the entire area of the standby screen 2100.

Accordingly, the electronic device 400 may sequentially display the first image 2110, the second image 2111, and the third image 2112 as shown in FIGs. 21AB,21AC, and 21AD, respectively.

Referring to FIGs. 21BA, 21BB, 21BC,and 21BD, when a second icon 2120 is touched, the electronic device 400 may identify the position of the second icon 2120 touched. For example, when a certain icon 2120 is located in a first position, the electronic device 400 (e.g., processor 401) may display a first image 2135, a second image 2126, and a third image 2127 such that a first point 2121 corresponding to the upper left corner of the second icon 2120 is extended in the direction to the reference numeral 2106; a second point 2122 corresponding to the lower left corner thereof is extended in the direction to the reference numeral 2107; a third point 2123 corresponding to the lower right corner thereof is extended in the direction to the reference numeral 2108; and a fourth point 2124 corresponding to the upper right corner thereof is extended in the direction to the reference numeral 2109.

Accordingly, the electronic device 400 may sequentially display the first image 2135, the second image 2126, and the third image 2127 as shown in FIGs. 21BB, 21BC, and 21BD, respectively.

According to an embodiment of the present disclosure described above, the present disclosure can improve the usability of an application user interface by recognizing the structure of a user interface for an application corresponding to an icon through understanding of the structure of an icon.

The term "module" as used herein may include a unit consisting of hardware, software, or firmware, and may, for example, be used interchangeably with the terms "logic", "logical block", "component", "circuit", and the like. The term "module" may indicate an integrally configured element or may indicate a minimum unit that performs one or more functions or a part thereof. The term "module" may indicate an element that is mechanically or electronically implemented and may include, for example, an application specific integrated circuit (ASIC), a field programmable gate array (FPGA), and a programmable-logic device, which is known or will be developed, for performing certain operations. At least some of devices (e.g., modules or functions thereof) or methods (e.g., operations) according to an embodiment of the present disclosure may be implemented by an instruction which is stored a non-transitory computer-readable storage medium (e.g., the memory 130) in the form of a program module. The instruction, when executed by a processor (e.g., the processor 120), may cause the one or more processors to execute the function corresponding to the instruction. The non-transitory computer-readable storage medium may include a hard disk, a floppy disk, a magnetic medium (e.g., a magnetic tape), an optical media (e.g., a compact disk (CD) ROM (CD-ROM), a DVD), a magneto-optical media (e.g., a floptical disk), an inner memory, etc. The instruction may include code generated by a complier or code that can be executed by an interpreter. The programming module according to the present disclosure may include one or more of the aforementioned elements or may further include other additional elements, or some of the aforementioned elements may be omitted. Operations performed by a module, a programming module, or other elements according to an embodiment of the present disclosure may be executed sequentially, in parallel, repeatedly, or in a heuristic manner. At least some operations may be executed according to another sequence, may be omitted, or may further include other operations.

While the present disclosure has been shown and described with reference to certain embodiments thereof, it will be understood by those skilled in the art that various changes in form and detail may be made therein without departing from the scope of the present disclosure as defined by the appended claims and their equivalents.

## Claims

1. An electronic device comprising:
a touch screen that displays one or more application execution icons; and
a processor that is electrically connected with the touch screen, and is configured, when a first icon is selected from among the one or more application execution icons, to display an execution screen of a first application corresponding to the first icon,
wherein the execution screen of the first application is configured to display at least one second object corresponding to at least one first object from among a plurality of icon objects included in the first icon.

2. The electronic device of claim 1, wherein the processor is configured to display, on the execution screen of the first application, at least one of the second objects obtained by changing at least one of a position, a size, and a shape of at least one of the first objects.

3. The electronic device of claim 1, wherein the processor is configured to control the touch screen to shift at least one of the displayed first objects from a first position to a second position different from the first positiontouch screen.

4. The electronic device of claim 3, wherein the processor is configured to control the touch screen to shift the at least one of the displayed first objects from the second position to a third position corresponding to at least one of the second objects and different from the second position.

5. The electronic device of claim 1, wherein the processor is configured to control the touch screen to change a first size of at least one of the first objects into a second size different from the first size.

6. The electronic device of claim 5, wherein the processor is configured to control the touch screen to change the second size of the at least one of the first objects into a third size corresponding to at least one of the second objects and different from the second size.

7. The electronic device of claim 1, wherein the processor is configured to control the touch screen to change a first shape of at least one of the first objects into a second shape different from a first shape.

8. The electronic device of claim 7, wherein the processor is configured to control the touch screen to change the second shape of the at least one of the first objects into a third shape corresponding to at least one of the second objects and different from the second shape.

9. The electronic device of claim 1, wherein the processor is configured to control the touch screen to sequentially display a first image and a second image corresponding to the first application when the first icon is selected,
wherein the first icon includes a first background object and a first configuration object,
wherein the first image includes a second background object, which corresponds to the first background object and is larger than the first background object, and a second configuration object corresponding to the first configuration object; and
wherein the second image includes a third background object, which corresponds to the second background object and is larger than the second background object, and a third configuration object corresponding to the second configuration object.

10. The electronic device of claim 1, wherein the processor is configured to identify position information of the first icon when a touch input is detected on the first icon, and to control the touch screen to display an execution screen of the first application based on the identified position information.

11. The electronic device of claim 1, wherein the processor is configured to control the touch screen to display the first icon when the execution screen of the first application is terminated.

12. A non-transitory machine-readable medium storing instructions configured, when being executed by at least one processor, to allow the at least one processor to execute one or more operations comprising:
displaying one or more application execution icons on a touch screen; and
displaying an execution screen of a first application corresponding to a first icon when the first icon is selected from among the one or more application execution icons,
wherein the execution screen of the first application is configured to display at least one second object corresponding to at least one first object from among a plurality of icon objects included in the first icon.

13. The non-transitory machine-readable medium of claim 12, wherein displaying the execution screen of the first application comprises:
displaying, on the execution screen of the first application, at least one of the second objects obtained by changing at least one of a position, a size, and a shape of at least one of the first objects.

14. The non-transitory machine-readable medium of claim 12, wherein displaying the execution screen of the first application comprises:
displaying, on the touch screen, at least one of the first objects shifting from a first position to a second position different from the first positiontouch screen.

15. A method of operating an electronic device, comprising:
displaying one or more application execution icons on a touch screen; and
displaying an execution screen of a first application corresponding to a first icon when the first icon is selected from among the one or more application execution icons,
wherein the execution screen of the first application is configured to display at least one second object corresponding to at least one first object among a plurality of icon objects included in the first icon.
